# EUROPÄISCHE PATENTSCHRIFT

(11) **EP 4 233 653 B1**
(45) Veröffentlichungstag und Bekanntmachung des Hinweises auf die Patenterteilung: **11.02.2026**
(21) Anmeldenummer: 22158604.3
(22) Anmeldetag: 24.02.2022
(51) Int. Cl.: A47J 43/07, A47J 36/10, A47J 27/08

(54) **ZUBEREITUNGSGEFÄSS FÜR EINE KÜCHENGERÄTEBASIS UND KÜCHENGERÄT**
PREPARATION VESSEL FOR A KITCHEN APPLIANCE BASE AND KITCHEN APPLIANCE
RÉCIPIENT DE PRÉPARATION POUR UNE BASE DE ROBOT DE CUISINE ET ROBOT DE CUISINE

(43) Veröffentlichungstag der Anmeldung: 30.08.2023
(73) Patentinhaber: Vorwerk & Co. Interholding GmbH, 42270 Wuppertal (DE)
(72) Erfinder: CHAROPOULOS, Philipp, 40878 Ratingen (DE); JANSEN, Sebastian, 44803 Bochum (DE)
(74) Vertreter: Dr. Solf & Zapf Patent- und Rechtsanwalts PartG mbB

(56) Entgegenhaltungen:
- EP-A1- 3 875 003
- EP-A1- 3 875 007
- CN-U- 211 749 084
- US-A1- 2021 338 012

## Beschreibung

Die Erfindung betrifft ein Zubereitungsgefäß gemäß dem Oberbegriff des Anspruchs 1.

Zubereitungsgefäße zum Anordnen an einer Küchengerätebasis eines Küchengeräts sowie zugehörige Küchengeräte sind im Stand der Technik in einer Vielzahl von Ausgestaltungen bekannt. Derartige Küchengeräte mit Zubereitungsgefäß dienen dem automatischen, teilautomatischen oder manuellen Zubereiten, z. B. Zerkleinern, Mahlen, Pressen, Rühren, Garen und/oder Warmhalten, von Speisen. Der Aufnahmebereich der Küchengerätebasis weist insbesondere mindestens eine elektrische Schnittstelle auf, um ein in den Aufnahmebereich eingebrachtes Zubereitungsgefäß mit mindestens einer Arbeitsspannung zu versorgen, beispielsweise für eine Heizeinrichtung, oder um Sensoren zu kontaktieren.

US 2021/338012 A1 offenbart eine Behälteranordnung und ein Lebensmittelverarbeitungssystem mit einer derartigen Behälteranordnung. Die Behälteranordnung weist einen verschließbaren Körper mit einer Kammer und einer Vakuumdichtungsanordnung auf. Die Vakuumdichtungsanordnung weist wiederum ein Nadelventil auf. Das Nadelventil ist relativ zu einer Kammeröffnung bewegbar, so dass die Nadelventilöffnung in die Kammer hinein und aus dieser heraus bewegbar ist.

CN 211 749 084 U offenbart eine Küchenmaschine mit einem abnehmbaren Zerkleinerungsbehälter. Der Zerkleinerungsbehälter ist von einem Basisgerät abnehmbar, wobei der Boden des Zerkleinerungsbehälters mit einer Auslassöffnung versehen ist. An der Auslassöffnung ist ein Ventil angeordnet, das über eine Zahnleiste betätigbar ist. Die Zahnleiste ist mit einem Zahnrad des Basisgeräts betätigbar, um das Ventil zu öffnen und zu schließen.

Aus EP 3 875 007 A1 und EP 3 875 003 A1 ist beispielsweise ein Zubereitungsgefäß bekannt, bei dem der Deckel mit einer Verriegelungseinrichtung automatisiert mit dem Zubereitungsgefäß verriegelbar ist. Dazu ist an der Verriegelungseinrichtung, die das Zubereitungsgefäß mit der Küchengerätebasis verriegelt, ein zusätzlicher Mechanismus vorgesehen, der eine Bewegung auf den Deckel oder ein für die Verriegelung vorgesehenes Bauteil überträgt und eine Verriegelung des Deckels bewirkt.

Obwohl die aus dem Stand der Technik bekannten Küchengeräte mit automatischer Verriegelung des Deckels bereits eine hohe Benutzersicherheit und einen vorteilhaften Bedienkomfort gewährleisten, besteht weiterhin das Bedürfnis, den Funktionsumfang eines Zubereitungsgefäßes bei der Zubereitung von Speisen weiter zu steigern.

Der Erfindung liegt daher die Aufgabe zugrunde, ein Zubereitungsgefäß und ein Küchengerät anzugeben, mit denen die Funktionalitäten zur Zubereitung von Speisen bei vorteilhaftem Bedienkomfort und hoher Benutzersicherheit erweitert sind.

Die vorgenannte Aufgabe ist bei einem gattungsgemäßen Zubereitungsgefäß mit den Merkmalen des Kennzeichnungsteils des Anspruchs 1 gelöst.

Die Offenbarung der Erfindung umfasst ein Zubereitungsgefäß zum Anordnen an einer Küchengerätebasis eines Küchengeräts, aufweisend mindestens einen Zubereitungsraum, mindestens einen Deckel zum Verschließen des Zubereitungsraums, wobei mindestens ein Ventil und mindestens ein Ventilbetätigungsmittel und/oder mindestens ein Deckelbetätigungsmittel vorhanden ist/sind. Das Ventilbetätigungsmittel dient vorteilhaft dem Öffnen und/oder Schließen des Ventils. Es ist auch vorgesehen, dass zumindest eine Bewegung des Ventils - Öffnen oder Schließen - per Federkraft betätigt wird, während die jeweils andere Bewegung - Öffnen oder Schließen - mit dem Ventilbetätigungsmittel erfolgt. Das Deckelbetätigungsmittel dient vorteilhaft dem Ver- und Entriegeln des Deckels mit dem Zubereitungsgefäß.

Das Zubereitungsgefäß ist zum Anordnen an einer Küchengerätebasis ausgebildet und eingerichtet. Die Küchengerätebasis weist vorzugsweise ein Gehäuse mit mindestens einem Aufnahmebereich, insbesondere zur Aufnahme eines Zubereitungsgefäßes, mindestens einen Elektromotor, mindestens eine Wiegeeinrichtung, insbesondere im Aufnahmebereich, und/oder eine Spannungsversorgung auf.

Im auf eine Küchengerätebasis aufgebrachten Zustand dient das Zubereitungsgefäß dem automatischen, teilautomatischen oder manuellen Zubereiten, z. B. Zerkleinern, Mahlen, Pressen, Rühren, Garen und/oder Warmhalten, von Speisen.

Beispielsweise weist das Zubereitungsgefäß mindestens einen Schnittstellenbereich auf, der zum Anordnen in einer Küchengerätebasis, insbesondere zum formschlüssigen Zusammenwirken mit einem Aufnahmebereich der Küchengerätebasis, ausgebildet ist. Beispielsweise ist im Schnittstellenbereich mindestens eine elektrische Schnittstelle angeordnet, um das Zubereitungsgefäß mit einer Arbeitsspannung zu versorgen, beispielsweise für eine Heizeinrichtung, oder um Sensoren im Zubereitungsgefäß zu kontaktieren. Die elektrische Schnittstelle wirkt im in dem Aufnahmebereich angeordneten Zustand mit einer elektrischen Gegenschnittstelle der Küchengerätebasis zusammen.

Ferner ist beispielsweise vorgesehen, dass im Schnittstellenbereich des Zubereitungsgefäßes mindestens eine Arbeitsschnittstelle angeordnet ist, die zur Übertragung eines Drehmoments von einer Arbeitseinheit, z. B. eines Elektromotors, der Küchengerätebasis auf ein an dem Zubereitungsgefäß angeordnetes Werkzeug dient.

Der Zubereitungsraum des Zubereitungsgefäßes ist vorzugsweise mit einem Metall ausgekleidet oder aus einem Metall ausgebildet. Bevorzugt ist das Metall ein rostfreier Stahl. Der Zubereitungsraum ist von dem Deckel verschließbar, indem der Deckel mit dem Zubereitungsgefäß verriegelt wird. Vorzugsweise ist der Zubereitungsraum, nachdem er von dem Deckel verschlossen worden ist und der Deckel mit dem Zubereitungsgefäß verriegelt ist, druckfest. Zwischen dem Deckel und dem Zubereitungsgefäß, insbesondere einem oberen Rand des Zubereitungsgefäßes, ist beispielsweise mindestens eine Dichtung angeordnet.

Das Zubereitungsgefäß weist mindestens ein Aktorelement auf, das in einem Schnittstellenbereich des Zubereitungsgefäßes angeordnet ist. Das Aktorelement ist insbesondere derart im Schnittstellenbereich angeordnet, dass es von einem Antriebsmittel der Küchengerätebasis betätigbar, insbesondere bewegbar, ist. Vorzugsweise ist das Aktorelement rotierbar gehalten. Beispielsweise ist das Aktorelement von einem Antriebsmittel der Küchengerätebasis, beispielsweise von einem Antriebsring, rotierbar, insbesondere indem das Antriebsmittel im an der Küchengerätebasis angeordneten Zustand formschlüssig mit dem Aktorelement zusammenwirkt. Es ist bevorzugt vorgesehen, dass das Antriebsmittel der Küchengerätebasis, das mit dem Aktorelement zusammenwirkt bzw. das Aktorelement antreibt, als rotierbarer Antriebsring, insbesondere mit Antriebsvorsprüngen, als Zahnrad oder als translatorisch bewegte Zahnleiste ausgebildet ist.

Das Aktorelement steht derart mit dem Stellmittel in Wirkverbindung, dass das Stellmittel von dem Aktorelement, insbesondere zumindest zeitweise, betätigbar ist, bevorzugt bewegbar oder rotierbar ist. Das Stellmittel ist zudem derart ausgebildet und eingerichtet, dass mittels einer Betätigung, insbesondere Bewegung oder Rotation, des Stellmittels eine Verriegelung oder Entriegelung des Deckels, insbesondere mit einem oberen Randbereich des Zubereitungsgefäßes, bewirkbar ist. Das Stellmittel wirkt dazu mittelbar oder unmittelbar auf den Deckel oder ein an dem Zubereitungsgefäß oder dem Deckel angeordnetes Verriegelungselement ein, um den Deckel, insbesondere formschlüssig, zu verriegeln bzw. den Deckel zu entriegeln.

Dabei ist vorgesehen, dass der Deckel für eine Verriegelung bzw. Entriegelung rotiert wird, oder dass ein Verriegelungselement am Deckel oder am Zubereitungsgefäß angeordnet ist, das relativ zum Zubereitungsgefäß und/oder zum Deckel rotierbar gehalten ist, um den Deckel mit dem Zubereitungsgefäß zu verriegeln bzw. zu entriegeln.

Erfindungsgemäß ist vorgesehen, dass das Zubereitungsgefäß und/oder der Deckel mindestens ein Ventil, insbesondere Druckventil oder Sicherheitsventil, aufweist bzw. aufweisen. Das Ventil ist beispielsweise zentral im Deckel oder außermittig am Deckel, insbesondere in einem Randbereich des Deckels, angeordnet. Mit dem Ventil ist eine Verbindung zwischen Zubereitungsraum und Umgebung des Zubereitungsgefäßes herstellbar. Ferner ist mindestens ein Ventilbetätigungsmittel vorgesehen, mit dem das Ventil betätigbar ist, also das Ventil geöffnet und/oder geschlossen werden kann. Es ist vorgesehen, dass das Ventil im unbetätigten Zustand geöffnet oder geschlossen ist, so dass es bei einer Betätigung durch das Ventilbetätigungsmittel entweder geschlossen oder geöffnet wird. Vorzugsweise ist das Ventil im unbetätigten Zustand geschlossen und wird bei Betätigung durch das Ventilbetätigungsmittel teilweise oder vollständig geöffnet.

Das Stellmittel ist derart ausgebildet und angeordnet, dass mit dem Stellmittel, mittelbar oder unmittelbar, zumindest zeitweise auch das Ventilbetätigungsmittel betätigbar ist. Mit dem Stellmittel ist folglich mittelbar oder unmittelbar das Ventil öffen- und/oder schließbar.

Sofern es sich bei dem Ventil um ein federbelastetes Ventil handelt, das entgegen der Federkraft durch Herausziehen eines Ventilschiebers geöffnet wird, ist vorgesehen, dass das Ventilbetätigungsmittel beispielsweise als Ventilbetätigungshebel ausgebildet ist, durch dessen Anheben der Ventilschieber entgegen der Federkraft herausgezogen wird, um Druck aus dem Zubereitungsraum entweichen zu lassen.

Dadurch, dass das Aktorelement mit dem Stellmittel zusammenwirkt und dass mit dem Stellmittel zumindest mittelbar der Deckel verriegel- bzw. entriegelbar sowie das Ventilbetätigungsmittel betätigbar ist, ist mit einer Bewegung, insbesondere einer Rotation, des Aktorelements - in Abhängigkeit von der Bewegungs- oder Rotationsrichtung - eine Ver- oder Entriegelung des Deckels sowie eine Betätigung des Ventilbetätigungsmittels bewirkbar.

Bevorzugt ist vorgesehen, dass das Aktorelement, das Stellmittel, das Verriegelungsmittel und das Ventilbetätigungsmittel als mechanisch betätigbare Bauteile ausgebildet sind, die, bedingt durch ihre Gestaltung und Konstruktion, in einer Wirkverbindung zueinander stehen.

In einer alternativen Ausgestaltung ist allerdings auch vorgesehen, das alle oder einzelne Wirkzusammenhänge elektromechanisch ausgebildet sind. Das bedeutet beispielsweise, dass einzelne Wirkzusammenhänge über elektrische Stellmittel, beispielsweise Motoren, insbesondere Servomotoren, Schrittmotoren und/oder Linearmotoren, ausgebildet werden. Beispielsweise wird eine durch die Küchengerätebasis bewirkte Rotation des Aktorelements zur Verriegelung des Zubereitungsgefäßes mit der Küchengerätebasis von mindestens einem Sensor, z. B. einem Potentiometer, erfasst, verarbeitet und als Stellsignal an ein als Motor ausgebildetes Stellmittel ausgegeben, um, insbesondere über eine mechanische Wirkverbindung zu dem Motor, eine Verriegelung des Deckels zu bewirken und/oder das Ventilbetätigungsmittel zu betätigen. Bei dieser Alternative sind keine mechanischen Komponenten erforderlich, die die Strecke zwischen Schnittstellenbereich des Zubereitungsgefäßes und oberem Randbereich des Zubereitungsgefäßes überbrücken. Ein Zusammenwirken der Komponenten kann zumindest teilweise über eine elektrische Signalübertragung erfolgen. Die Steuerung erfolgt vorzugsweise über eine in der Küchengerätebasis vorgesehene Steuereinheit. Eine Bedienung durch einen Benutzer erfolgt beispielsweise über eine an der Küchengerätebasis ausgebildete Bedieneinrichtung.

Es ist auch vorgesehen, dass das Stellmittel mindestens einen Motor und einen Stellarm aufweist, wobei der Stellarm mit dem Motor bewegbar ist. Die Bewegung des Stellarms bewirkt - wie vor- und nachstehend für das Stellmittel beschrieben - eine Verriegelung des Deckels mit dem Zubereitungsgefäß und/oder eine Betätigung des Ventils. Der Motor weist eine Spannungsversorgung durch Kontaktierung mit der Küchengerätebasis und/oder mindestens einen Energiespeicher auf, insbesondere so dass der Motor über eine an der Küchengerätebasis angeordnete Bedieneinrichtung - unabhängig von einer Anordnung an der Küchengerätebasis - und/oder über eine Druckfläche oder einen betätigbaren Hebel am Zubereitungsgefäß fernsteuerbar ist, um den Deckel zu ver- oder entriegeln und/oder das Ventil zu betätigen.

Das Ventilbetätigungsmittel und/oder das Deckelbetätigungsmittel weist insbesondere ein elektrisches Stellmittel, beispielsweise einen Motor, vorzugsweise einen Servomotor, einen Schrittmotor und/oder einen Linearmotor, auf. Das Ventilbetätigungsmittel und/oder das Deckelbetätigungsmittel weist beispielsweise eine separate, insbesondere mit der Küchengerätebasis kontaktierbare Spannungsversorgung und/oder einen Energiespeicher zur Spannungsversorgung, z.B. mindestens einen Akkumulator, auf. Beispielsweise ist das Ventilbetätigungsmittel und/oder das Deckelbetätigungsmittel bei von der Küchengerätebasis entnommenem Zubereitungsgefäß mit dem Energiespeicher mit einer Spannung versorgbar; im an der Küchengerätebasis angeordneten Zustand ist der Energiespeicher über die kontaktierbare Spannungsversorgung aufladbar und/oder das Ventilbetätigungsmittel und/oder das Deckelbetätigungsmittel mit einer Spannung versorgbar. Es ist vorzugsweise vorgesehen, dass das Ventilbetätigungsmittel und/oder das Deckelbetätigungsmittel - insbesondere unabhängig von der Anordnung an der Küchengerätebasis - über eine Bedieneinrichtung der Küchengerätebasis fernsteuerbar ist. Vorzugsweise ist vorgesehen, dass das Ventilbetätigungsmittel und/oder das Deckelbetätigungsmittel beispielsweise über eine Druckfläche oder einen betätigbaren Hebel am Zubereitungsgefäß für einen Benutzer betätigbar sind, um Druck über das Ventil entweichen zu lassen.

Die Erfindung weist gegenüber dem Stand der Technik den Vorteil auf, dass die Betätigung des Ventils über das gemeinsame Stellmittel in den, insbesondere mechanischen, Ablauf des Zusammenwirkens zwischen Deckel und Zubereitungsgefäß eingebunden ist. In Abhängigkeit von der Ausführungsform wird damit eine Ventilbetätigung unter vorgegebenen Randbedingungen sichergestellt. Durch ein erfindungsgemäßes Zubereitungsgefäß wird ein Zubereiten von Speisen im Zubereitungsraum unter Druck bei gleichzeitig hoher Benutzersicherheit ermöglicht.

Gemäß einer ersten Ausgestaltung des Zubereitungsgefäßes ist vorgesehen, dass das Stellmittel zumindest teilweise mit dem Aktorelement um eine gemeinsame, erste Drehachse drehbar gehalten ist. Vorzugsweise weist das Stellmittel mindestens zwei Stellarme auf, die mit dem Aktorelement derart verbunden sind, dass sie gemeinsam mit dem Aktorelement rotierbar sind. Beispielsweise sind die Stellarme einstückig mit dem Aktorelement ausgebildet. Insbesondere sind die Stellarme gegenüberliegend zueinander an dem Aktorelement angeordnet. Wird folglich das Aktorelement um die erste Drehachse in eine erste Richtung oder eine zweite Richtung rotiert, rotieren die Stellarme des Stellmittels gleichermaßen.

Es ist insbesondere vorgesehen, dass die von dem Aktorelement wegweisenden Enden der Stellarme unmittelbar mit dem Deckel zusammenwirken, um diesen zu verriegeln, oder mit einem Verriegelungsmittel zusammenwirken, um über das Verriegelungselement den Deckel mit dem Zubereitungsgefäß zu verriegeln. Wird der Deckel unmittelbar von den Stellarmen betätigt, wird der Deckel beispielsweise um die erste Drehachse rotiert, um mit dem Zubereitungsgefäß, insbesondere nach Art eines Bajonettverschlusses, zu verriegeln.

Ferner ist vorgesehen, dass die von dem Aktorelement wegweisenden Enden der Stellarme mittelbar oder unmittelbar mit dem Ventilbetätigungsmittel in Wirkverbindung stehen, so dass mit einer Rotation der Stellarme um die erste Drehachse zumindest abschnittsweise eine Betätigung des Ventilbetätigungsmittels bewirkbar ist. Die von dem Aktorelement weggewandten Endbereiche der Stellarme wirken vorzugsweise formschlüssig mit dem Deckel und/oder dem Verriegelungselement zusammen.

Beispielsweise erstrecken sich die Stellarme zunächst von dem Aktorelement weg und weisen dann einen Übergangsbereich auf, ab dem die Stellarme sich im Wesentlichen senkrecht in Richtung des Deckels bzw. der Öffnung des Zubereitungsgefäßes erstrecken.

Vorzugsweise ist vorgesehen, dass mindestens einer der Stellarme, vorzugsweise beide Stellarme, mindestens einen Vorsprung an dem von dem Aktorelement weggewandten Endbereich aufweisen, und dass der Vorsprung mit einer Führungsnut im Verriegelungsmittel zusammenwirkt. Die Führungsnut ist derart ausgebildet und angeordnet, dass das Verriegelungsmittel dann von dem Vorsprung eines Stellarms betätigt wird, wenn sich der jeweilige Stellarm in einem der beiden äußeren Randbereiche der Führungsnut befindet. Die Länge der Führungsnut bestimmt dann beispielsweise einen Leerhub des Aktorelements bzw. des Stellmittels. Ein Leerhub kann beispielsweise dazu genutzt werden, um eine zeitliche Abfolge von verschiedenen Funktionen des Zubereitungsgefäßes zu realisieren, beispielsweise wird innerhalb des Leerhubs eine Verriegelung des Zubereitungsgefäßes mit einer Küchengerätebasis realisiert. Bei einem Leerhub erfolgt eine Bewegung eines ersten Elements in einer mechanischen Wirkkette, ohne dass diese Bewegung in der Wirkkette vollständig übertragen wird. Die Wirkkette ist folglich zumindest zeitweise unterbrochen. Vorzugsweise ist vorgesehen, dass das Ventilbetätigungsmittel mit dem Verriegelungsmittel in einem Wirkzusammenhang steht.

Gemäß einer alternativen Ausgestaltung des Zubereitungsgefäßes ist vorgesehen, dass das Stellmittel zumindest teilweise um eine zweite Drehachse drehbar ist. Insbesondere ist die zweite Drehachse von einer ersten Drehachse des Aktorelements verschieden. Vorzugsweise sind das Aktorelement und das um die zweite Drehachse drehbare Stellmittel derart mechanisch gekoppelt, dass mit einer Bewegung, insbesondere Drehung, des Aktorelements eine Drehung des Stellmittels um die zweite Drehachse bewirkbar ist.

Beispielsweise weist das Stellmittel mindestens eine Stellwelle auf, die durch eine Bewegung, insbesondere Drehung, des Aktorelements rotierbar ist. Das um die zweite Drehachse rotierbare Stellmittel, insbesondere die Stellwelle, wirkt mittelbar oder unmittelbar mit dem Deckel und/oder einem Verriegelungsmittel zusammen, um den Deckel mit dem Zubereitungsgemäß zu verriegeln. Ferner steht das um die zweite Drehachse rotierbare Stellmittel, insbesondere die Stellwelle, mit dem Ventilbetätigungsmittel in Wirkverbindung, so dass das Ventilbetätigungsmittel mittels einer Rotation des Stellmittels, insbesondere der Stellwelle, betätigbar ist.

Gemäß einer besonders bevorzugten Ausführungsform des Zubereitungsgefäßes ist vorgesehen, dass das Stellmittel mit mindestens einem Verriegelungsmittel zusammenwirkt, um den Deckel mit dem Zubereitungsgefäß zu verriegeln. Das Verriegelungsmittel ist von dem Stellmittel zumindest zwischen einer Freigabeposition und einer Verriegelungsposition bewegbar. Bevorzugt ist das Verriegelungsmittel von dem Stellmittel auch in eine Betätigungsposition für das Ventilbetätigungsmittel bewegbar.

In der Freigabeposition ist der Deckel auf das Zubereitungsgefäß aufbringbar bzw. von diesem entfernbar. In der Verriegelungsposition ist der Deckel - sofern vorhanden - durch das Verriegelungsmittel formschlüssig mit dem Zubereitungsgefäß verriegelt. Vorzugsweise ist das Verriegelungsmittel, die Öffnung zum Zubereitungsraum umgebend, rotierbar gehalten. Beispielsweise ist das Verriegelungsmittel als Verriegelungsring, insbesondere mit Verriegelungsvorsprüngen, ausgebildet. Durch eine Rotation des Verriegelungsmittels schieben sich die Verriegelungsvorsprünge des Verriegelungsmittels unter zugehörige Vorsprünge am Deckel, wodurch der Deckel mit dem Zubereitungsgefäß verriegelt wird. Vorzugsweise ist die Verriegelung zwischen Zubereitungsgefäß und Deckel durch das Verriegelungsmittel nach Art eines Bajonettverschlusses ausgebildet.

Insbesondere ist vorgesehen, dass das Verriegelungsmittel mit dem Ventilbetätigungsmittel in Wirkverbindung steht, so dass zumindest in bestimmten Positionen des Verriegelungsmittels das Ventilbetätigungsmittel betätigt wird bzw. betätigbar ist.

Gemäß einer weiteren Ausgestaltung des Zubereitungsgefäßes hat sich als vorteilhaft herausgestellt, wenn mindestens ein Zwischenelement vorgesehen ist und das Zwischenelement durch eine Bewegung des Stellelements mittelbar oder unmittelbar bewegbar, insbesondere verschiebbar ist. Beispielweise weist das Stellmittel mindestens eine rotierbar Stellwelle auf, die durch ihre Rotation eine Bewegung des Zwischenelements bewirkt. Vorzugsweise ist das Zwischenelement im oberen Randbereich des Zubereitungsgefäßes angeordnet. Das Zwischenelement ist vorzugsweise translatorisch oder rotatorisch bewegbar gehalten. Insbesondere ist das Zwischenelement auf einem Kreissegment auf dem Außenumfang des Zubereitungsgefäßes bewegbar gehalten.

Das Verriegelungsmittel steht vorzugsweise derart mit dem Zwischenelement in Wirkverbindung, dass das Verriegelungsmittel von dem Zwischenelement zumindest zwischen einer Freigabeposition und einer Verriegelungsposition bewegbar ist. In der Freigabeposition ist der Deckel aufbring- bzw. entnehmbar, in der Verriegelungsposition ist bei vorhandenem Deckel der Deckel mit dem Zubereitungsgefäß verriegelt. Zudem ist vorgesehen, dass zumindest in einer Betätigungsposition des Zwischenelements mit dem Zwischenelement das Ventilbetätigungsmittel betätigbar ist. Folglich ist mit einer Bewegung des Zwischenelements, die durch das Stellmittel bzw. durch eine Bewegung des Stellmittels bewirkt wird, sowohl der Deckel mit dem Zubereitungsgefäß verriegelbar, als auch zumindest in einer Betätigungsposition das Ventilbetätigungsmittel betätigbar. Die Bewegung des Stellmittels wird durch das Aktorelement bewirkt.

Insbesondere um mit dem Zwischenelement in der Betätigungsposition das Ventilbetätigungsmittel zu betätigen, hat sich gemäß einer weiteren Ausgestaltung als vorteilhaft herausgestellt, wenn das Zwischenelement, insbesondere an mindestens einem Ende, mindestens eine Kontaktschräge aufweist. Das Ventilbetätigungsmittel ist mit der Kontaktschräge betätigbar. Vorzugsweise weist das Ventilbetätigungsmittel eine Gegenkontaktschräge auf, so dass, wenn das Zwischenelement auf das Ventilbetätigungsmittel zubewegt wird, die Gegenkontaktschräge an der Kontaktschräge abgleitet, wodurch das Ventilbetätigungsmittel - zumindest teilweise - in eine vorbestimmte Richtung bewegt und/oder das Ventilbetätigungsmittel hebelartig an einem Ende angehoben wird. Durch die von der Kontaktschräge verursachte Betätigung des Ventilbetätigungsmittels wird das Ventil betätigt, insbesondere das Ventil geöffnet.

Eine weitere Ausgestaltung des Zubereitungsgefäßes sieht vor, dass das Zwischenelement in einer Führungskontur bewegbar gehalten ist. Das Zwischenelement ist in der Führungskontur translatorisch oder auf einer Kreisbahn, insbesondere um die erste Drehachse X1, rotierbar gehalten. Dazu ist das Zwischenelement bogenförmig ausgebildet. An ihrer Außenseite ist die Führungskontur beispielsweise als Griffelement ausgebildet, um ein Greifen des Zubereitungsgefäßes durch einen Benutzer zu ermöglichen. Beispielsweise weist die Führungskontur an der Außenseite mindestens eine Griffmulde auf.

Um das Zwischenelement vorteilhaft auf einfache Weise bewegen zu können, ist gemäß einer weiteren Ausgestaltung vorgesehen, dass das Zwischenelement mindestens eine Zahnleiste zum Zusammenwirken mit dem Stellmittel aufweist. Das Stellmittel ist derart ausgebildet und eingerichtet, dass es durch ein Zusammenwirken mit der Zahnleiste des Zwischenelements eine Bewegung des Zwischenelements, vorzugsweise auf einer Kreisbahn um die erste Drehachse X1, bewirken kann.

Ein Zusammenwirken zwischen Stellmittel und Zwischenelement wird insbesondere gemäß einer weiteren Ausgestaltung dadurch verbessert, dass das Stellmittel mindestens einen ersten Zahnring und mindestens einen zweiten Zahnring aufweist. Der erste Zahnring ist derart angeordnet, dass er mit dem Aktorelement zusammenwirken kann, insbesondere derart, dass eine Bewegung des Aktorelements eine Rotation des Zahnrings bewirkt. Die Rotation des ersten Zahnrings bewirkt vorzugsweise eine Rotation zumindest eines Teils des Stellmittels, wodurch der zweite Zahnring des Stellmittels, der an dem von dem Aktorelement weggewandten Ende des Stellmittels angeordnet ist, ebenfalls rotiert wird.

Der zweite Zahnring greift vorzugsweise in die Zahnleiste des Zwischenelements ein, so dass eine Rotation des Stellmittels über den ersten Zahnring und den zweiten Zahnring eine Verschiebung des Zwischenelements entlang der Kreisbahn bewirkt. Durch die Verschiebung des Zwischenelements wird - in Abhängigkeit von der Richtung der Rotation des Stellmittels - beispielsweise der Deckel mit dem Zubereitungsgefäß verriegelt oder entriegelt und - zumindest in mindestens einer Betätigungsposition des Zwischenelements - das Ventilbetätigungsmittel betätigt.

Es ist vorzugsweise ferner vorgesehen, dass der erste Zahnring und der zweite Zahnring unterschiedliche Verzahnungseigenschaften aufweisen, um eine Übersetzung zu realisieren. Beispielsweise weisen der erste Zahnring und der zweite Zahnring eine unterschiedliche Anzahl an Zähnen auf, so dass durch das Stellmittel eine Übersetzung zwischen Aktorelement und Zwischenelement realisiert wird. In Abhängigkeit von der Anzahl der Zähne für den ersten Zahnring und den zweiten Zahnring bewegt sich das Zwischenelement schneller oder langsamer als das Aktorelement. So kann beispielsweise mit einer nur geringen Stellbewegung des Aktorelements eine große Stellbewegung des Zwischenelements oder mit einer großen Stellbewegung des Aktorelements eine nur geringe Stellbewegung des Zwischenelements realisiert werden.

Besonders bevorzugt ist ein formschlüssiges Zusammenwirken zwischen Aktorelement und Stellmittel. Gemäß einer weiteren Ausgestaltung ist dazu vorteilhaft vorgesehen, dass das Aktorelement mindestens eine Aktorzahnleiste aufweist, und dass das Stellmittel zumindest zeitweise mit dem ersten Zahnring in die Aktorzahnleiste eingreift. Die Aktorzahnleiste wird beispielsweise translatorisch oder rotatorisch bewegt, um das Stellmittel zu bewegen bzw. die Bewegung auf das Stellmittel zu übertragen. Die Bewegung der Aktorzahnleiste bewirkt vorzugsweise eine Rotation des ersten Zahnrings des Stellmittels, insbesondere eine Rotation der mit dem ersten Zahnring verbundenen Stellwelle. Es ist auch vorgesehen, dass das Aktorelement als Zahnrad ausgebildet ist, das eine Bewegung des Zahnrings des Stellmittels verursacht.

Vorzugsweise um eine mechanisch bedingte, zeitliche Abfolge des Zusammenwirkens der Komponenten des Zubereitungsgefäßes zu realisieren, ist gemäß einer weiteren Ausgestaltung des Zubereitungsgefäßes vorgesehen, dass die Aktorzahnleiste mindestens einen ersten Zahnleistenabschnitt und mindestens einen zweiten Zahnleistenabschnitt aufweist. Die Zahnleistenabschnitte sind durch mindestens einen Zwischenbereich zueinander beabstandet. Bevorzugt ist vorgesehen, dass im Zwischenbereich keine Kraftübertragung von dem Aktorelement auf das Stellmittel erfolgen kann, insbesondere um mittels des Zwischenbereichs einen Leerhub des Aktorelement zu realisieren. Beispielsweise ist der Zwischenbereich dazu zahnfrei ausgebildet oder weist eine Verzahnung auf, die keine Rotation des ersten Zahnrings bewirken kann.

Bei dem Leerhub bewegt sich beispielsweise das Aktorelement weiter, ohne dass eine Bewegung des Stellmittels bzw. eine Bewegung des Zwischenelements bewirkt wird. Eine Bewegung des Stellmittels bzw. des Zwischenelements wird erst dann wieder bewirkt, wenn die Bewegung des Aktorelements so weit fortgeschritten ist, dass das Stellmittel mit dem zweiten Zahnleistenabschnitt oder bei einer entgegengesetzten Bewegung wieder mit dem ersten Zahnleistenabschnitt zusammenwirkt.

Vorzugsweise ist vorgesehen, dass bei einer Bewegung des Aktorelements im Bereich des ersten Zahnleistenabschnitts eine Verriegelung des Deckels mit dem Zubereitungsgefäß realisiert wird, beispielsweise indem das Zwischenelement das Verriegelungsmittel in die Verriegelungsposition bewegt, um den Deckel mit dem Zubereitungsgefäß zu verriegeln. Im Bereich des Leerhubs erfolgt vorzugsweise eine formschlüssige Verriegelung des Zubereitungsgefäßes mit der Küchengerätebasis. Vorzugsweise verursacht eine Bewegung des Aktorelements beim Zusammenwirken des zweiten Zahnleistenabschnitts mit dem Stellmittel eine Verschiebung des Zwischenelements derart, dass die Kontaktschräge des Zwischenelements mit der Kontaktschräge des Ventilbetätigungsmittels zusammenwirkt, um das Ventil zu öffnen. Gleichermaßen kann bei einer Bewegung in entgegengesetzter Richtung das Ventil geschlossen werden.

Insbesondere um ein unbeabsichtigtes Lösen des Zubereitungsgefäßes von einer Küchengerätebasis zu verhindern, ist gemäß einer weiteren Ausgestaltung vorgesehen, dass das Aktorelement mindestens eine Verriegelungskontur aufweist, und dass die Verriegelungskontur zum Zusammenwirken mit einer Verriegelungsgegenkontur an der Küchengerätebasis ausgebildet ist. Vorzugsweise wirken die Verriegelungskontur und die Verriegelungsgegenkontur formschlüssig zusammen. Insbesondere wirken die Verriegelungskontur und die Verriegelungsgegenkontur nach der Funktion eines Bajonettverschlusses zusammen, beispielsweise indem die Verriegelungskontur relativ zur Verriegelungsgegenkontur bewegt wird. Bevorzugt weist das Aktorelement eine Mehrzahl von Verriegelungsvorsprüngen als Verriegelungskontur auf, die mit Verriegelungshaken als Verriegelungsgegenkontur an der Küchengerätebasis zusammenwirken.

Besonders bevorzugt ist das mechanische oder elektromechanische Zusammenwirken des Aktorelements, des Stellmittels sowie des Verriegelungsmittels und des Ventilbetätigungsmittels derart aufeinander abgestimmt, dass bei einer Bewegung des Aktorelements in einer ersten Richtung zunächst der Deckel mit dem Zubereitungsgefäß verriegelt wird und anschließend insbesondere das Zubereitungsgefäß mit einer Küchengerätebasis verriegelt wird. Nachfolgend ist das Ventilbetätigungsmittel betätigbar oder das Ventil bleibt unbetätigt. Gleichermaßen wird bei einer Bewegung des Aktorelements in einer entgegengesetzten, zweiten Richtung vorzugsweise zunächst die Verriegelung zwischen Zubereitungsgefäß und Küchengerätebasis gelöst. Das Zubereitungsgefäß kann dann entweder mit verriegeltem Deckel von der Küchengerätebasis entnommen werden oder das Aktorelement verursacht eine Entriegelung des Deckels, beispielsweise indem das Verriegelungsmittel von dem Stellmittel aus seiner Verriegelungsposition in seine Freigabeposition bewegt wird.

Vorteilhaft ist vorgesehen, dass das Zubereitungsgefäß mindestens ein Bestätigungsmittel aufweist, mit dem eine Verriegelung des Deckels mit dem Zubereitungsgefäß und/oder des Zubereitungsgefäßes mit der Küchengerätebasis und/oder eine Stellung des Ventils überprüfbar und/oder bestätigbar ist. Das Bestätigungsmittel ist dafür eingerichtet und ausgebildet, die korrekte Position aller zusammenwirkenden Komponenten oder einen Teil davon zu prüfen und zu bestätigen. Das Bestätigungsmittel weist beispielsweise eine Drehmomentmessung und/oder Strommessung eines Motors in der Küchengerätebasis und oder mindestens einen Schalter auf, der von dem bewegten Aktorelement, dem bewegten Stellmittel, dem Zwischenelement, dem Verriegelungsmittel, dem Ventilbetätigungsmittel und/oder dem Deckel betätigbar ist. Unter Verwendung mindestens eines Signals des Bestätigungsmittels ist beispielsweise eine Arbeitsspannung an der elektrischen Schnittstelle für das Zubereitungsgefäß und/oder eine Bewegung an einer Arbeitsschnittstelle der Küchengerätebasis für das Zubereitungsgefäß freigebbar.

Insbesondere um ein versehentliches Öffnen des Deckels bei im Zubereitungsraum vorhandenem Druck zu verhindern, ist gemäß einer weiteren Ausgestaltung vorgesehen, dass mindestens eine Sicherheitseinrichtung vorgesehen ist, die dazu eingerichtet und ausgebildet ist, ein Öffnen des Deckels zu verhindern, solange ein Schwellenwert eines Drucks im Zubereitungsraum überschritten wird. Vorzugsweise kann der Deckel nicht freigegeben werden, solange der Druck im Zubereitungsraum größer als oder gleich 2 kPa, insbesondere größer als oder gleich 4 kPa ist.

Ferner ist vorgesehen, dass die Sicherheitseinrichtung dadurch ausgebildet ist, dass der Deckel bei im Zubereitungsraum vorhandenem Druck ein kleines Stück nach oben wandert, wobei diese Bewegung zur Blockierung einer Öffnungsbewegung des Deckels und/oder des Verriegelungsmittels verwendet wird, die verhindert, dass beispielsweise das Verriegelungsmittel von der Verriegelungsposition in die Freigabeposition bewegt wird bzw. dass der Deckel derart rotiert wird, dass er in seine Freigabeposition gelangt.

Zudem ist vorgesehen, dass die Sicherheitseinrichtung beispielweise ein Gewichtsventil aufweist, das eine Bewegung des Verriegelungsmittels, des mit dem Verriegelungsmittel gekoppelten Zwischenelements und/oder des Deckels in die Freigabeposition verhindert, solange ein durch die Bauart des Gewichtsventils vorbestimmter Druck im Zubereitungsraum herrscht.

Des Weiteren ist vorgesehen, dass die Sicherheitseinrichtung dadurch ausgebildet ist, dass das Zwischenelement eine zumindest teilweise bewegbare Erweiterung aufweist, die mit einem im Deckel angeordneten Gewichtsventil interagiert. Sofern sich das Gewichtsventil in einer durch Druck bedingten, nach außen vorstehenden Position befindet, kann das Zwischenelement nicht an dem Gewichtsventil vorbeibewegt werden, wodurch eine Entriegelung des Deckels verhindert wird. Vorzugsweise ist vorgesehen, dass eine Klappbewegung der Erweiterung durch ein Kurvengetriebe realisiert wird.

Für den Fall, dass ein Benutzer das mit dem Deckel verriegelte, unter Druck stehende Zubereitungsgefäß von einer Küchengerätebasis entfernt, hat es sich gemäß einer weiteren Ausgestaltung als vorteilhaft herausgestellt, wenn vorgesehen ist, dass der Ventilbetätigungsmittel und/oder das Stellmittel für eine manuelle Betätigung durch einen Benutzer eingerichtet und ausgebildet sind. Vorzugsweise ist vorgesehen, dass das Ventilbetätigungsmittel beispielsweise als Druckfläche oder betätigbarer Hebel für einen Benutzer zugänglich ist, um Druck über das Ventil entweichen zu lassen. Ferner ist vorgesehen, dass das Stellmittel, insbesondere beispielsweise eine Stellwelle oder mindestens ein Stellarm, für einen Benutzer zugänglich ist, so dass manuell eine Rotation, beispielsweise einer Stellwelle, erfolgen kann, um das Ventilbetätigungsmittel beispielsweise über das Zwischenelement zu betätigen und den Druck über das Ventil entweichen zu lassen. Dazu weist das Stellmittel beispielsweise ein durch einen Benutzer drehbares Stellrad oder ein anderes Betätigungselement auf.

Sofern es sich um ein federbelastetes Ventil handelt, das entgegen der Federkraft durch Herausziehen eines Ventilschiebers geöffnet wird, ist vorgesehen, dass das Ventilbetätigungsmittel beispielsweise als Ventilbetätigungshebel ausgebildet ist, durch dessen Anheben der Ventilschieber aus seiner Führung entgegen der Federkraft herausgezogen wird, um Druck entweichen zu lassen. Zudem ist vorgesehen, dass das Ventil beispielsweise als Gewichtsventil ausgebildet ist, bei dem in seiner natürlichen Lage durch die Auflagegeometrie und Schwerkraft das Gewicht einer Öffnung zum Topfinneren abschließt. Bei entsprechend hohem Innendruck wird das Ventil angehoben und der Druck kann entweichen. Gleichermaßen kann das Gewicht auch über einen Ventilbetätigungshebel angehoben werden.

Die eingangs genannte Aufgabe ist ferner gelöst mit einem Küchengerät mit mindestens einer Küchengerätebasis und mindestens einem Zubereitungsgefäß nach einem der vorstehend beschriebenen Ausführungsbeispiele. Das Zubereitungsgefäß ist mit seinem Schnittstellenbereich in einem Aufnahmebereich an der Küchengerätebasis anordenbar. Vorzugsweise weist die Küchengerätebasis mindestens ein Antriebsmittel zum, insbesondere formschlüssigen, Zusammenwirken mit dem Aktorelement des Zubereitungsgefäßes in dem im Aufnahmebereich angeordneten Zustand auf.

Beispielsweise ist das Antriebsmittel der Küchengerätebasis als Antriebsring mit zwei Vorsprüngen ausgebildet. Diese Vorsprünge wirken im aufgebrachten Zustand mit entsprechenden Ausnehmungen im Aktorelement zusammen, so dass eine Bewegung des Antriebsrings der Küchengerätebasis eine gleiche Bewegung des Aktorelements, hier eine Rotation, bewirkt.

Eine weitere Ausgestaltung sieht vor, dass das Zubereitungsgefäß mindestens eine Verkleidung aufweist. Die Verkleidung erstreckt sich über den gesamten Umfang oder einen Teil des Umfangs des Zubereitungsgefäßes und bildet insbesondere zumindest einen Teil der außenliegenden Oberfläche des Zubereitungsgefäßes. Die Verkleidung erstreckt sich beispielsweise zwischen dem oberen Rand des Zubereitungsgefäßes und einem Fußbereich des Zubereitungsgefäßes über einen Teil der Höhe oder die gesamte Höhe. Die Verkleidung ist vorzugsweise Teil einer doppelwandigen Konstruktion. Das Stellmittel und/oder das Aktormittel und/oder das Verriegelungsmittel und/oder das Zwischenelement ist/wird insbesondere zumindest teilweise oder vollständig von der Verkleidung abgedeckt oder ist/sind in einem Zwischenraum der doppelwandigen Konstruktion angeordnet. Beispielsweise weist die Verkleidung ein thermisch isolierendes Material auf oder ist aus einem solchen ausgebildet.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Küchengeräts mit Zubereitungsgefäß und Küchengerätebasis in perspektivischer Ansicht,
- Fig. 2: ein Ausführungsbeispiel einer Küchengerätebasis in perspektivischer Ansicht,
- Fig. 3: ein erstes Ausführungsbeispiel eines Zubereitungsgefäßes in einem ersten Zustand,
- Fig. 4: das erste Ausführungsbeispiel eines Zubereitungsgefäßes gemäß Fig. 3 in einem zweiten Zustand,
- Fig. 5: ein weiteres Ausführungsbeispiel eines Zubereitungsgefäßes in einem ersten Zustand,
- Fig. 6: das Ausführungsbeispiel eines Zubereitungsgefäßes gemäß Fig. 5 in einem zweiten Zustand,
- Fig. 7: ein weiteres Ausführungsbeispiel eines Zubereitungsgefäßes in perspektivischer Ansicht,
- Fig. 8: eine Detailansicht eines Ausführungsbeispiels eines Zubereitungsgefäßes,
- Fig. 9: ein Ausführungsbeispiel eines Zubereitungsgefäßes, und
- Fig. 10: ein Ausführungsbeispiel eines Zubereitungsgefäßes.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

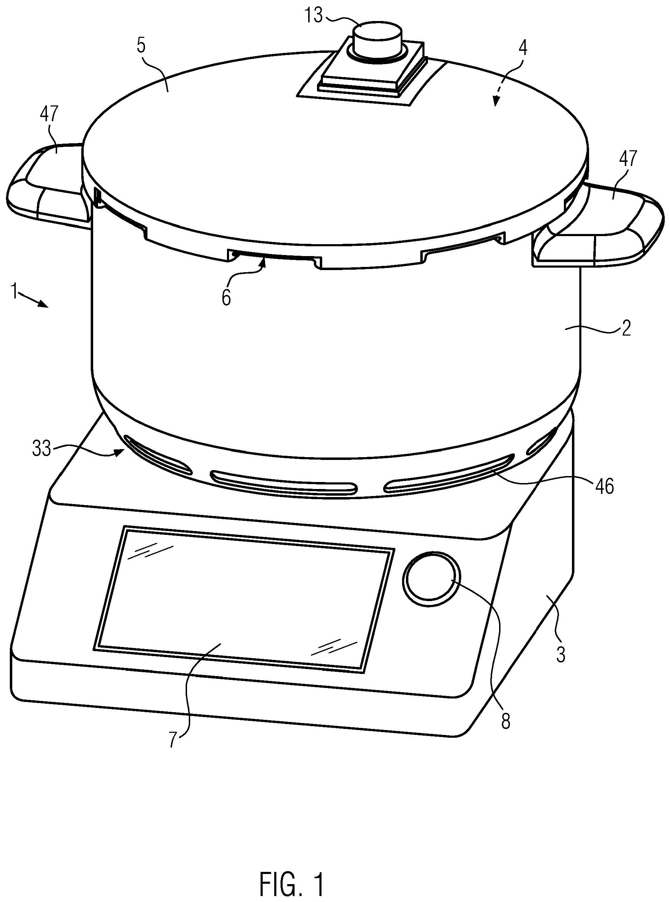

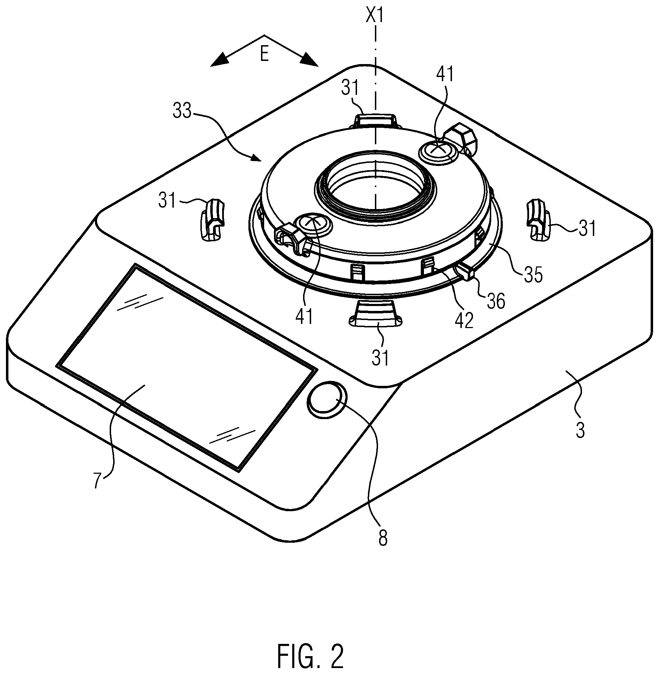

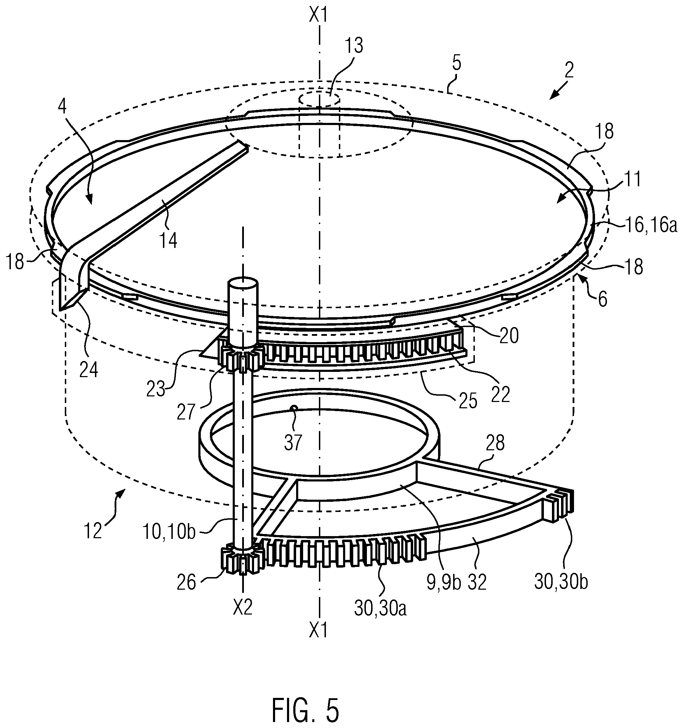

Fig. 1 zeigt ein Ausführungsbeispiel eines Küchengeräts 1 mit einem Zubereitungsgefäß 2 und einer Küchengerätebasis 3. Fig. 2 zeigt ein Ausführungsbeispiel einer Küchengerätebasis 3 gemäß Fig. 1 ohne Zubereitungsgefäß 2. Gemäß Fig. 1 ist das Zubereitungsgefäß 2 an der Küchengerätebasis 3 angeordnet. Das Zubereitungsgefäß 2 weist einen Zubereitungsraum 4 auf, der von einem Deckel 5 verschließbar ist, um beispielsweise innerhalb des Zubereitungsraumes 4 Speisen unter Druck zu garen. Zwischen dem Deckel 5 und dem oberen Rand 6 des Zubereitungsgefäßes 2 ist beispielsweise eine - nicht dargestellte - Dichtung angeordnet. Der Deckel 5 und das Zubereitungsgefäß 2 sind über einen bajonettartigen Verschluss miteinander verriegelbar, insbesondere indem der Deckel 5 relativ zum Zubereitungsgefäß 2 oder ein Verriegelungsmittel 16, beispielsweise ein Verriegelungsring 16a, - siehe beispielsweise Fig. 5 - relativ zum Zubereitungsgefäß 2 und zum Deckel 5 bewegt wird. Der Deckel weist ein im Randbereich angeordnetes Ventil 13 auf. Die Küchengerätebasis 3 weist gemäß Fig. 1 und Fig. 2 eine Bedien- und Anzeigeeinrichtung 7 sowie ein Eingabemittel 8 auf. Das Zubereitungsgefäß 2 weist eine vollumfänglich angeordnete Verkleidung 43 sowie zwei gegenüberliegend zueinander angeordnete Tragegriffe 47 auf.

Gemäß Fig. 2 weist der Aufnahmebereich 33 eine elektrische Schnittstelle auf, die bei diesem Ausführungsbeispiel zwei Leistungskontakte 41, beispielsweise zur Kontaktierung mindestens einer Heizeinrichtung, und acht Signalkontakte 42, beispielsweise zur Kontaktierung von Sensoren, insbesondere Thermoelementen, aufweist. Der Aufnahmebereich 33 erstreckt sich im Wesentlichen in der Ebene E.

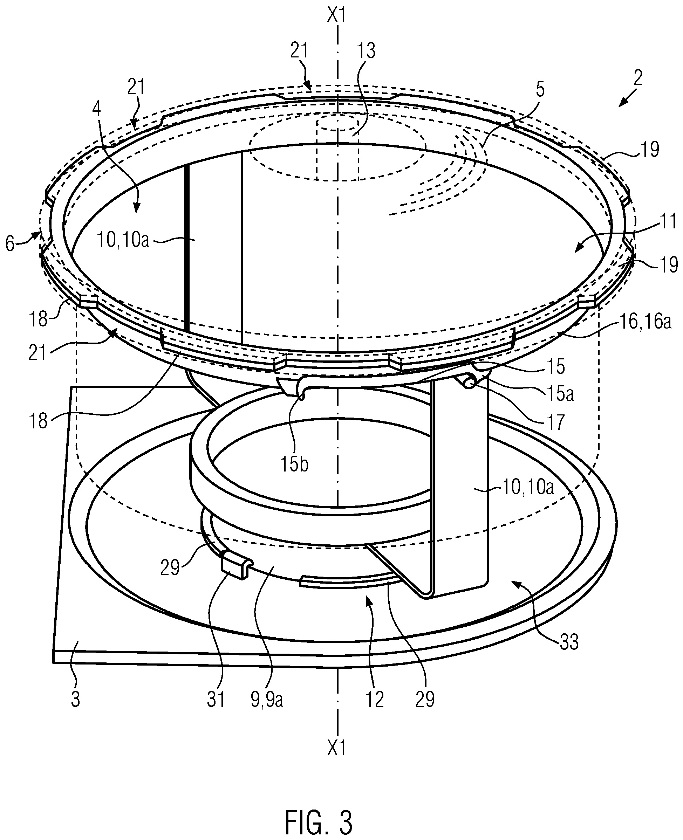

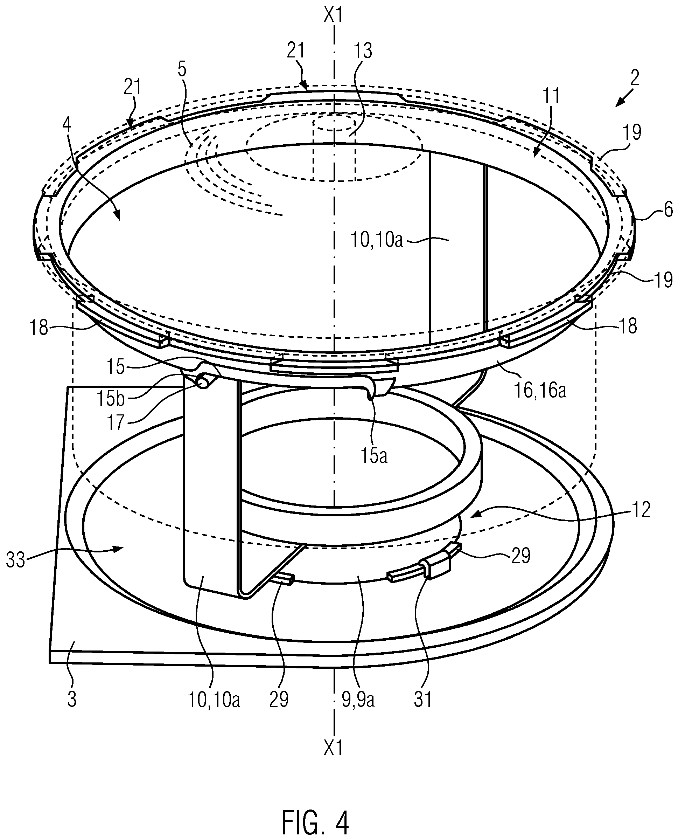

Fig. 3 und Fig. 4 zeigen ein Ausführungsbeispiel eines zumindest teilweise transparent dargestellten Zubereitungsgefäßes 2 in einem ersten Zustand - Fig. 3 - und einem zweiten Zustand - Fig. 4. Aus Gründen der besseren Übersicht sind einige Teile des Zubereitungsgefäßes in den Fig. 3 und 4 nur schematisch oder transparent dargestellt. Die Küchengerätebasis 3 ist in Fig. 3 und 4 nur teilweise dargestellt.

Das Zubereitungsgefäß 2 weist gemäß Fig. 3 und Fig. 4 einen Deckel 5 auf, mit dem der Zubereitungsraum 4 verschließbar ist. Das Zubereitungsgefäß 2 weist ein Aktorelement 9 sowie ein Stellmittel 10 auf. Das Aktorelement 9 ist hier als einstückig mit dem Stellmittel 10 ausgebildeter Aktorring 9a ausgebildet. Das Stellmittel 10 weist bei diesem Ausführungsbeispiel zwei Stellarme 10a auf, die sich gegenüberliegend zueinander, ausgehend von dem Aktorelement 9, erstrecken und einstückig mit dem Aktorelement 9 ausgebildet sind. Ausgehend von dem Aktorelement 9 erstrecken sich die Stellarme 10a zunächst im Wesentlichen waagerecht nach außen und in einen nachfolgenden Bereich etwa senkrecht nach oben in Richtung einer Öffnung 11 des Zubereitungsgefäßes 2. Das Aktorelement 9 ist im Wesentlichen ringförmig ausgebildet und in einem Schnittstellenbereich 12 angeordnet, der zum Anordnen an einer Küchengerätebasis 3 - siehe Fig. 1 und 2 - ausgebildet ist. Das Aktorelement 9 ist rotierbar um eine erste Drehachse X1 an dem Zubereitungsgefäß 2 angeordnet.

Dadurch, dass das Stellmittel 10 in Form der Stellarme 10a einstückig mit dem Aktorelement 9 ausgebildet ist, ist das Stellmittel 10 unmittelbar von dem Aktorelement 9 betätigbar, hier bewegbar. Durch eine Betätigung des Stellmittels 10 mit dem Aktorelement 9 ist eine Verriegelung und Entriegelung des Deckels 5 mit dem Zubereitungsgefäß 2 bewirkbar.

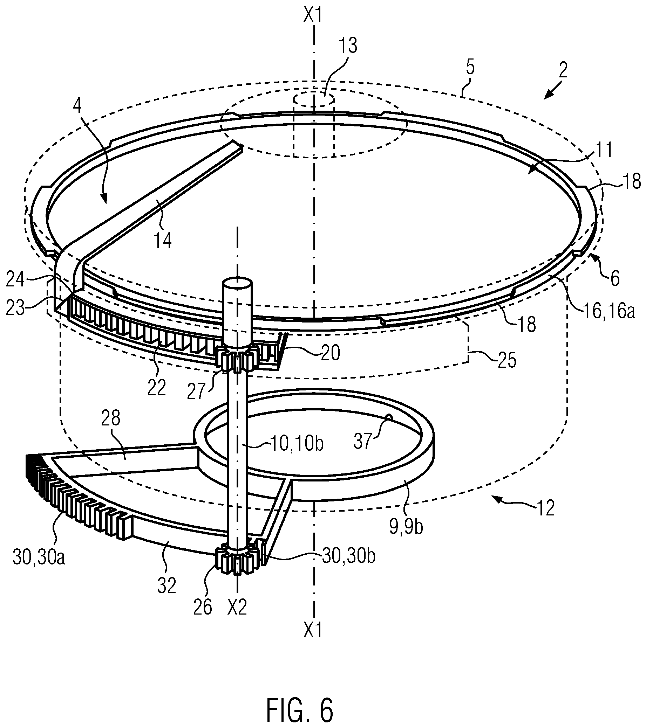

Das Zubereitungsgefäß 2 weist ferner ein zentral im Deckel 5 angeordnetes Ventil 13 auf, mit dem ein Druck im Zubereitungsraum 4 regulierbar ist. Zudem weist das Zubereitungsgefäß 2 ein beispielhaft in Fig. 5 und 6 dargestelltes Ventilbetätigungsmittel 14 auf, mit dem das Ventil 13 geöffnet werden kann. Das Ventilbetätigungsmittel 14 steht mit dem Stellmittel 10 und damit auch mit dem Aktorelement 9 mechanisch in Wirkverbindung. Folglich ist durch eine Rotation des Aktorelements 9 das Ventil 13 über das Ventilbetätigungsmittel 14 betätigbar.

Eine Entriegelung bzw. Verriegelung zwischen Deckel 5 und Zubereitungsgefäß 2 wird dadurch bewirkt, dass die Stellarme 10a des Stellmittels 10 formschlüssig mit einer Führungsnut 15 in einem als Verriegelungsring 16a ausgebildeten Verriegelungsmittel 16 zusammenwirken. Das Verriegelungsmittel 16 ist rotierbar an einem oberen Rand 6, die Öffnung 11 zum Zubereitungsraum 4 umgebend angeordnet und ist beispielsweise zwischen einer in Fig. 3 dargestellten Freigabeposition und einer in Fig. 4 dargestellten Verriegelungsposition rotierbar.

Zum Rotieren des Verriegelungsmittels 16 weisen die Stellarme 10a jeweils einen Vorsprung 17 auf, der mit der Führungsnut 15 formschlüssig zusammenwirkt. Gemäß Fig. 3 liegt der Vorsprung 17 an einer ersten Anschlagkante 15a an, durch deren Zusammenwirken mit dem Vorsprung 17 das Verriegelungsmittel 16 in die dargestellte Freigabeposition rotiert worden ist. Gemäß Fig. 4 liegt der Vorsprung 17 an einer zweiten Anschlagkante 15b an, durch deren Zusammenwirken mit dem Vorsprung 17 das Verriegelungsmittel 16 in die in Fig. 4 dargestellte Verriegelungsposition rotiert worden ist.

Zum Verriegeln des Deckels 5 mit dem Zubereitungsgefäß 2 weist das Verriegelungsmittel 16 gemäß Fig. 3 und Fig. 4 Verriegelungsvorsprünge 18 auf, die gemäß Fig. 3 in der Freigabeposition im Wesentlichen in Überdeckung mit Randvorsprüngen 19 des Zubereitungsgefäßes 2 ausgerichtet sind, so dass in die Zwischenbereiche 32 hier nicht dargestellte Verriegelungsbereiche des Deckels 5 eingeführt werden können. Wenn nachfolgend die Verriegelungsvorsprünge 18 in den Bereich der Zwischenräume 20 verschwenkt werden (siehe Fig. 4), wird der Deckel 5 formschlüssig mit dem Zubereitungsgefäß 2 verriegelt.

Fig. 5 und 6 zeigen ein Ausführungsbeispiel eines Zubereitungsgefäßes 2 in zwei verschiedenen Zuständen in perspektivischer Ansicht. Aus Gründen der besseren Übersicht sind einige Teile des Zubereitungsgefäßes in den Fig. 5 und 6 nur schematisch oder transparent dargestellt. Insbesondere sind die Randvorsprünge 19 des Zubereitungsgefäßes 2 - siehe Fig. 3 und 4 - nicht dargestellt. Das Zubereitungsgefäß 2 weist ebenfalls ein Verriegelungsmittel 16 in Form eines rotierbar am oberen Rand 6 des Zubereitungsgefäßes 2 gehaltenen Verriegelungsmittels 16 in Form eines Verriegelungsrings 16a auf. Der Verriegelungsring 16a ist auch bei diesem Ausführungsbeispiel rotierbar gehalten und weist Verriegelungsvorsprünge 18 zum formschlüssigen Zusammenwirken mit zugehörigen Randvorsprüngen - in Fig. 5 und 6 nicht dargestellt - des Deckels 5 auf.

Bei dem Ausführungsbeispiel der Fig. 5 und 6 ist ein bogenförmiges Zwischenelement 20 vorgesehen, das um die erste Drehachse X1 auf einer Kreisbahn rotierbar gehalten ist. Das Zwischenelement 20 steht mit dem Stellmittel 10, das bei diesem Ausführungsbeispiel eine Stellwelle 10b aufweist, in mechanischer Wirkverbindung. Die Stellwelle 10b ist um eine zweite Drehachse X2 rotierbar, die von der ersten Drehachse X1 verschieden ist. Bei einer Bewegung des Zwischenelements 20 wird ebenfalls das Verriegelungsmittel 16 bewegt. Lediglich ausgehend von der Ausgangsposition in Fig. 5 weist das Zwischenelement 20 eine kurze Leerbewegung auf, bei der das Verriegelungsmittel 16 nicht mitbewegt wird.

Das Verriegelungsmittel 16, insbesondere der Verriegelungsring 16a, ist durch das Zwischenelement 20 u.a. in die in Fig. 6 dargestellte Verriegelungsposition bewegbar. Das Zwischenelement 20 weist an einem in Richtung des Ventilbetätigungsmittels 14 gerichteten Ende eine Kontaktschräge 23 auf, mit der das Ventilbetätigungsmittel 14 betätigbar ist. Zur Betätigung weist das Ventilbetätigungsmittel 14 bei diesem Ausführungsbeispiel eine Gegenkontaktschräge 24 auf, die an der Kontaktschräge 23 abgleitet, wenn das Zwischenelement 20 gemäß Fig. 6 an die Gegenkontaktschräge 24 herangeführt wird. Durch das Abgleiten der Gegenkontaktschräge 24 an der Kontaktschräge 23 wird das Ventilbetätigungsmittel 14 betätigt, hier nach oben gedrückt. Dadurch, dass das Ventilbetätigungsmittel 14 betätigt wird, wird das Ventil 13 geöffnet und Druck aus dem Zubereitungsraum 4 kann nach außen entweichen. Das Zwischenelement 20 ist in einer Führungskontur 25 bewegbar gehalten, die sich, ausgehend von einem nicht dargestellten Außenumfang des Zubereitungsgefäßes 2, nach außen erstreckt, um ebenfalls als Griffelement an der Außenseite des Zubereitungsgefäßes 2 zu dienen.

Um ein Zusammenwirken mit dem Stellmittel 10 zu ermöglichen, weist das Zwischenelement 20 gemäß Fig. 5 und 6 eine Zahnleiste 22 auf. Das Stellmittel 10, hier in Form einer Stellwelle 10b, weist einen ersten Zahnring 26 und einen zweiten Zahnring 27 auf, die beabstandet zueinander an der Stellwelle 10b gehalten sind. Das Aktorelement 9 ist hier als einstückig mit einem Außenrahmen 28 mit einer Aktorzahnleiste 30 ausgebildetes Zahnaktorelement 9b ausgebildet. Das Aktorelement 9 wirkt ebenfalls formschlüssig mit dem Stellmittel 10, hier der Stellwelle 10b, zusammen, indem das Aktorelement 9 eine an einem Außenrahmen 28 angeordnete, bogenförmige Aktorzahnleiste 30 aufweist. Der Außenrahmen 28 hat vorzugsweise im Wesentlichen die Form eines Ringflächensegments. Die Aktorzahnleiste 30 wirkt mit dem ersten Zahnring 26 derart zusammen, dass der erste Zahnring 26 bei einer Rotation des Aktorelements 9 ebenfalls rotiert wird. Durch die Rotation des Stellmittels 10 bzw. der Stellwelle 10b wird ebenfalls der zweite Zahnring 27 rotiert, der mit der Zahnleiste 22 des Zwischenelements 20 zusammenwirkt und dadurch das Zwischenelement 20 gemäß Fig. 5 und 6 verschiebt. Bei einer Verschiebung bewegt das Zwischenelement 20 ebenfalls das Verriegelungsmittel 16.

Die Zahnleiste 30 des Aktorelements 9 weist einen ersten Zahnleistenabschnitt 30a und einen zweiten Zahnleistenabschnitt 30b auf, die durch einen zahnfreien Zwischenbereich 32 beabstandet zueinander angeordnet sind. Der erste Zahnleistenabschnitt 30a ist länger als der zweite Zahnleistenabschnitt 30b. Durch ein Zusammenwirken des ersten Zahnleistenabschnitts 30a der Zahnleiste 30 mit dem ersten Zahnring 26 und eine daraus resultierende Bewegung des Zwischenelements 20 bzw. des Verriegelungsmittels 16 wird der Deckel 5 mit dem Zubereitungsgefäß 2 verriegelt. Bewegt sich das Aktorelement 9 weiter in die erste Richtung, folgt der zahnfreie Zwischenbereich 32, der keine weitere Rotation des ersten Zahnrings 26 und damit auch keine weitere Bewegung des Zwischenelements 20 bewirkt.

Wenn sich der erste Zahnring 26 gemäß Fig. 6 am in Richtung des zweiten Zahnleistenabschnitts 30b gerichteten Endes des ersten Zahnleistenabschnitts 30a befindet, liegt die Kontaktschräge 23 des Zwischenelements 20 vorzugsweise an der Gegenkontaktschräge 24 des Ventilbetätigungsmittels 14 an. Das Ventil 13 ist aber noch nicht betätigt. Erst wenn der erste Zahnring 26 mit dem zweiten Zahnleistenabschnitt 30b zusammenwirkt, wird das Zwischenelement 20 weiter in Richtung des Ventilbetätigungsmittels 14 verschoben, wodurch das Ventilbetätigungsmittel 14 betätigt wird. Der zweite Zahnleistenabschnitt 30b dient folglich der Betätigung des Ventilbetätigungsmittels 14 durch das Zwischenelement 20.

Gemäß dem Ausführungsbeispiel der Fig. 3 und 4 wird bei einer Bewegung des Aktorelements 9 auch das Zubereitungsgefäß 2 mit der Küchengerätebasis 3 verriegelt. Dazu weist das Aktorelement 9 eine Verriegelungskontur 29, hier in Form von Verriegelungsvorsprüngen, auf. Die Verriegelungskonturen 29 sind zum Zusammenwirken mit Verriegelungsgegenkonturen 31 an der Küchengerätebasis 3 ausgebildet, die hier als Verriegelungshaken ausgebildet sind. Fig. 3 zeigt den unverriegelten Zustand, in dem das Zubereitungsgefäß 2 im Aufnahmebereich 33 der Küchengerätebasis 3 anordenbar ist. Die Verriegelungskonturen 29 werden dabei zwischen den Verriegelungsgegenkonturen 31 angeordnet. Erfolgt eine Rotation des Aktorelements 9, werden die Verriegelungskonturen 29 unter die Verriegelungsgegenkonturen 31 verschwenkt, so dass diese formschlüssig zusammenwirken und das Zubereitungsgefäß 2 mit der Küchengerätebasis 3 verriegeln. Eine Entnahme des Zubereitungsgefäßes 2 von der Küchengerätebasis 3 ist dann nicht mehr möglich.

Die Verriegelungsgegenkonturen 31 der Küchengerätebasis 3 sind beispielsweise auch in Fig. 2 dargestellt. Fig. 2 zeigt ferner das Antriebsmittel 35 der Küchengerätebasis 3, das hier als rotierbarer Antriebsring mit Antriebsvorsprüngen 36 ausgebildet ist. Die Antriebsvorsprünge 36 können beispielsweise mit in Fig. 5 und 6 dargestellten Rücksprüngen 37 im Aktorelement 9 formschlüssig zusammenwirken, um eine Bewegung des Antriebsmittels 35, hier eine Rotation, auf das Aktorelement 9 zu übertragen, wenn das Zubereitungsgefäß 2 im Aufnahmebereich 33 der Küchengerätebasis 3 angeordnet ist.

Gemäß den Ausführungsbeispielen der Fig. 3 und 4 erfolgt das mechanische Zusammenwirken wie folgt: In der in Fig. 3 dargestellten Ausgangsposition ist das Zubereitungsgefäß 2 nicht mit der Küchengerätebasis 3 verriegelt und auch der Deckel 5 liegt unverriegelt am oberen Rand 6 des Zubereitungsgefäßes 2 auf. Der Vorsprung 17 liegt an der ersten Anschlagkante 15a der Führungsnut 15 an. Wird nun das Aktorelement 9 von einem Antriebsmittel 35, beispielsweise gemäß Fig. 2, im Uhrzeigersinn - erste Richtung - bewegt, wird der Vorsprung 17 innerhalb der Führungsnut 15 entlang der Länge der Führungsnut 15 bewegt, ohne dass eine Betätigung des Verriegelungsmittels 16 erfolgt. Gleichzeitig werden die Verriegelungskonturen 29 des Aktorelements 9 in Richtung der Verriegelungsgegenkonturen 31 der Küchengerätebasis 3 bewegt. In dem Moment, in dem während der Rotation der Vorsprung 17 an der zweiten Anschlagkante 15b der Führungsnut 15 zur Anlage kommt, befinden sich die Verriegelungskonturen 29 im Übergang zur Verriegelung mit der Verriegelungsgegenkonturen 31 an der Küchengerätebasis 3.

Ab dem Zeitpunkt der Anlage des Vorsprungs 17 an der zweiten Anschlagkante 15b wird das Verriegelungsmittel 16 aus seiner Freigabeposition gemäß Fig. 3 in Richtung seiner Verriegelungsposition gemäß Fig. 4 bewegt. Gleichzeitig sind auch die Verriegelungskonturen 29 mit den Verriegelungsgegenkonturen 31 im Eingriff, so dass das Zubereitungsgefäß 2 mit der Küchengerätebasis 3 verriegelt ist. Ausgehend von der in Fig. 4 dargestellten Position könnte das Verriegelungsmittel 16 durch eine weitere Rotation des Aktorelements 9 im Uhrzeigersinn weiterbewegt werden. Dadurch würde das Ventilbetätigungsmittel 14 betätigt und das Ventil 13 geöffnet. Diese weitere Bewegung hätte auf die Verriegelung des Deckels 5 mit dem Zubereitungsgefäß 2 bzw. die Verriegelung des Zubereitungsgefäßes 2 mit der Küchengerätebasis 3 keinen Einfluss.

Wird das Aktorelement 9, ausgehend von der in Fig. 4 dargestellten Position, entgegen dem Uhrzeigersinn - zweite Richtung - bewegt, wird das Verriegelungsmittel 16 zunächst nicht bewegt, da sich der Vorsprung 17 entlang der Länge der Führungsnut 15 in Richtung der ersten Anschlagkante 15a bewegt.

Während sich der Vorsprung 17 in der Führungsnut 15 bewegt, werden allerdings die Verriegelungskonturen 29 aus dem Eingriff mit den Verriegelungsgegenkonturen 31 herausbewegt. Etwa zu dem Zeitpunkt, an dem der Vorsprung 17 an der ersten Anschlagkante 15a zur Anlage kommt, ist die Verriegelungskontur 29 aus dem Eingriff mit der Verriegelungsgegenkontur 31 herausgeschwenkt, so dass das Zubereitungsgefäß 2 bei gleichzeitig verriegeltem Deckel 5 von der Küchengerätebasis 3 entnommen werden kann. Das kann beispielsweise dazu erfolgen, um eine im Zubereitungsraum 4 vorhandene Speise unter Druck unabhängig von der Küchengerätebasis 2 weiter garen zu lassen.

Wird das Zubereitungsgefäß 2 allerdings auf der Küchengerätebasis 3 belassen, so wirkt der Vorsprung 17 gegen die Anschlagkante 15a, wodurch das Verriegelungsmittel 16 entgegen dem Uhrzeigersinn bewegt wird, so dass bei Erreichen der Freigabeposition gemäß Fig. 3 der Deckel 5 entnommen werden kann.

Bei einem alternativen Ausführungsbeispiel gemäß Fig. 3 und 4 wird das Zubereitungsgefäß 2 nicht mit der Küchengerätebasis 3 verriegelt, sondern lediglich der Deckel 5 mit dem Zubereitungsgefäß 2 verriegelt. Die Führungsnut 15 kann bei diesem Ausführungsbeispiel kürzer ausgebildet sein, um einen Leerhub zu realisieren.

Bei dem Ausführungsbeispiel der Fig. 5 und 6 erfolgt die mechanische Wirkverbindung wie folgt: Wird das Zubereitungsgefäß 2 auf eine Küchengerätebasis 3, beispielsweise gemäß Fig. 2, aufgesetzt, greifen die Antriebsvorsprünge 36 in die Rücksprünge 37 am Aktorelement 9 ein, um das Aktorelement 9 bei einer Drehung des Antriebsmittels 35 mitzubewegen. Ausgehend von der in Fig. 5 dargestellten Ausgangsposition, in der das Zubereitungsgefäß 2 in dem Aufnahmebereich 33 der Küchengerätebasis 3 angeordnet ist, ist der Deckel 5 nicht mit dem Zubereitungsgefäß 2 verriegelt und auch das Zubereitungsgefäß 2 ist nicht mit der Küchengerätebasis 3 verriegelt. Wird nun das Aktorelement 9 im Uhrzeigersinn - erste Richtung - bewegt, bewirkt der erste Zahnleistenabschnitt 30a der Zahnleiste 30 über den ersten Zahnring 26 eine Rotation der Stellwelle 10b, die über den zweiten Zahnring 27 eine Bewegung des Zwischenelements 20 bewirkt. Das Zwischenelement 20 ist derart mit dem Verriegelungsmittel 16 gekoppelt, dass zu Beginn der Bewegung des Zwischenelements 20 noch keine Bewegung des Verriegelungsmittels 16 erfolgt, sondern das Zwischenelement 20 etwas verzögert mit dem Verriegelungsmittel 16 zusammenwirkt. Vorzugsweise werden das Aktorelement 9 und das Zwischenelement 20 jeweils um etwa 5° rotiert, ohne dass das Zwischenelement 20 eine Bewegung des Verriegelungsmittels 16 bewirkt.

Im Moment des Zusammenwirkens des Zwischenelements 20 mit dem Verriegelungsmittel 16 wird das Verriegelungsmittel 16 von dem sich im Wesentlichen im Uhrzeigersinn bewegenden Zwischenelement 20 ebenfalls im Uhrzeigersinn bewegt. Hat der erste Zahnring 26 das Ende des ersten Zahnleistenabschnitts 30a erreicht, ist das Verriegelungsmittel 16 in einer derartigen Position, dass der Deckel 5 mit dem Zubereitungsgefäß 2 verriegelt ist. In diesem Moment liegt auch die Kontaktschräge 23 an der Gegenkontaktschräge 24 des Ventilbetätigungsmittels 14 an, ohne dieses zu betätigen. Für das Überstreichen des ersten Zahnleistenabschnitts 30a wird das Aktorelement 9 vorzugsweise um etwa 35° bewegt. Dabei bewegt sich das Zwischenelement 20 ebenfalls um etwa 35°. Das Verriegelungsmittel 16 wird aufgrund der anfänglichen verzögerten Mitnahme insbesondere nur um etwa 30° bewegt.

Wird das Aktorelement 9 weiter im Uhrzeigersinn - erste Richtung - bewegt, befindet sich der zweite Zahnring 27 im zahnfreien Zwischenbereich 32, so dass zwar eine weitere Rotation des Aktorelements 9 erfolgt, das Stellmittel 10 aber nicht weiter rotiert wird. In diesem Abschnitt erfolgt vorzugsweise eine Verriegelung des Zubereitungsgefäßes 2 mit der Küchengerätebasis 3 durch eine Rotation des Aktorelements 9, beispielsweise wie für die Fig. 3 und 4 beschrieben. Zum Überstreichen des zahnfreien Zwischenbereichs 32 wird das Aktorelement 9 vorzugsweise um weitere 30° also insgesamt um 65° bewegt. Am Ende des zahnfreien Zwischenbereiches 32 greift der erste Zahnring 26 in den zweiten Zahnleistenabschnitt 30b ein, wodurch das Zwischenelement 20 weiterbewegt wird.

Da die Kontaktschräge 23 bereits an der Gegenkontaktschräge 24 anliegt, wird das Ventilbetätigungsmittel 14 betätigt und das Ventil 13 geöffnet. Der zweite Zahnleistenabschnitt 30b dient folglich dem Öffnen und Schließen des Ventils 13 über das Ventilbetätigungsmittel 14. Vorzugsweise wird das Aktorelement 9 um etwa weitere 5° bewegt, um den zweiten Zahnleistenabschnitt 30b zu überstreichen und das Ventil zu betätigen. Zum Betätigen des Ventils wird das Aktorelement 9 vorzugsweise um etwa 70° aus seiner Ausgangsposition verschwenkt. In dem Zustand, in dem das Ventil 13 geöffnet ist, ist das Zubereitungsgefäß 2 vollständig mit der Küchengerätebasis 3 verriegelt, der Deckel 5 ebenfalls mit dem Zubereitungsgefäß 2 verriegelt, und es kann beispielsweise ein Zubereitungsschritt erfolgen, insbesondere eine in dem Zubereitungsgefäß 2 angeordnete Heizeinrichtung eingeschaltet oder ein Werkzeug betätigt werden.

Die Verriegelung des Deckels 5 mit dem Zubereitungsgefäß 2 sowie des Zubereitungsgefäßes 2 mit der Küchengerätebasis 3 kann beispielsweise über ein Bestätigungsmittel - nicht dargestellt - bestätigt werden. Das Bestätigungsmittel ist vorzugsweise dazu ausgebildet, einen Anschlag des Verriegelungsmittels 16 gegen den Deckel 5 elektromechanisch zu erkennen, beispielsweise über eine Drehmomentmessung / Strommessung eines Motors in der Küchengerätebasis 3, der das Antriebsmittel 35 antreibt. Es ist insbesondere vorgesehen, dass mit dem Bestätigungsmittel das Überfahren eines Schalters - nicht dargestellt - durch das Zwischenelement 20, das Verriegelungsmittel 16 oder ein anderes Bauteil in der mechanischen Kette in mindestens einer vorbestimmten Position erkannt wird.

Um nachfolgend einen Druckaufbau im Zubereitungsraum 4 zu ermöglichen, kann das Ventil 13 geschlossen werden, indem das Aktorelement 9 entgegen dem Uhrzeigersinn - zweite Richtung - rotiert und dadurch keine Kraft mehr von der Kontaktschräge 23 auf die Gegenkontaktschräge 24 ausgeübt wird. Wird beispielsweise das Aktorelement 9 weiter entgegen dem Uhrzeigersinn bewegt, wird im zahnfreien Zwischenbereich 32 beispielsweise die Verriegelung zwischen Zubereitungsgefäß 2 und Küchengerätebasis 3 gelöst. Am Ende des zahnfreien Zwischenbereiches 32 in Richtung des ersten Zahnleistenabschnitts 30a ist folglich der Deckel 5 weiterhin mit dem Zubereitungsgefäß 2 verriegelt, der Topf kann aber von der Küchengerätebasis 3 entnommen werden, beispielsweise um ein weiteres Garen oder Ruhen oder Druck zu ermöglichen. Wird der Topf auf der Küchengerätebasis 3 belassen, führt das Zusammenwirken des ersten Zahnleistenabschnitts 30a über die Stellwelle 10b und das Aktorelement 9 bei einer Rotation des Aktorelements 9 entgegen dem Uhrzeigersinn zu einer Bewegung des Verriegelungsmittels 16 von der Verriegelungsposition in die Freigabeposition, so dass am Ende der Deckel 5 von dem Zubereitungsgefäß 2 entnehmbar ist.

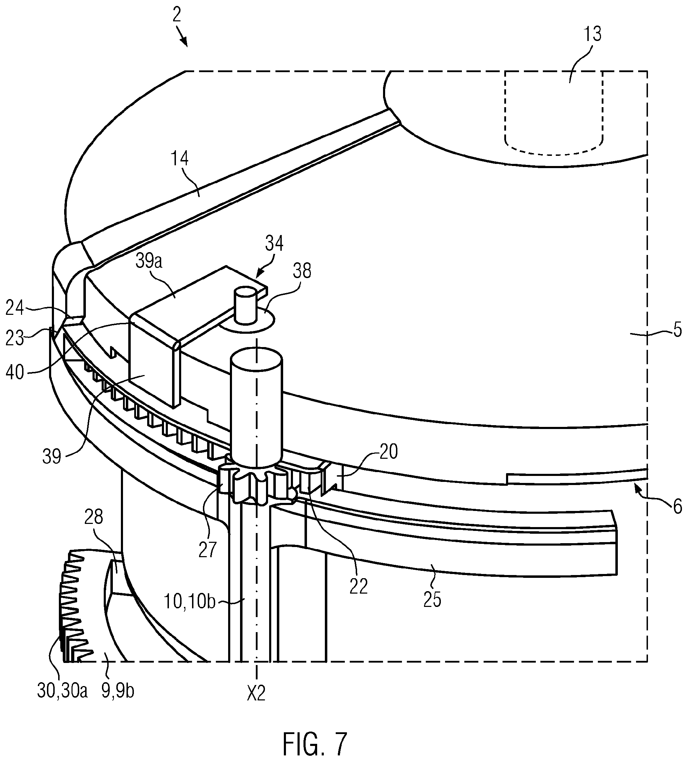

Insbesondere um sicherzustellen, dass der Deckel 5 nur dann entriegelt werden kann, wenn der Druck innerhalb des Zubereitungsraums 4 unterhalb einer unkritischen Schwelle, beispielsweise von 4 kPa, liegt, ist bei dem Ausführungsbeispiel gemäß Fig. 7 eine Sicherheitseinrichtung 34 vorgesehen. Die Sicherheitseinrichtung 34 weist ein Gewichtsventil 38 sowie eine klappbare Erweiterung 39 des Zwischenelements 20 auf. Die klappbare Erweiterung 39 weist ein Scharnier 40 zwischen zwei Abschnitten auf, so dass ein verschwenkbarer Abschnitt 39a bewegbar ist. Bei einer Bewegung des Zwischenelements 20 in Richtung des Ventilbetätigungsmittels 14 ist der verschwenkbare Abschnitt 39a vorzugsweise so angeordnet, dass er nicht mit dem Gewichtsventil 38 interagiert. Sobald das Zwischenelement 20 in der in Fig. 7 dargestellten Position angelangt ist, in der die Kontaktschräge 23 an der Gegenkontaktschräge 24 anliegt, wird der verschwenkbare Abschnitt 39a beispielsweise über ein - nicht dargestelltes - Kurvengetriebe in die heruntergeklappte Position gemäß Fig. 7 bewegt, so dass der klappbare Abschnitt 39a der Erweiterung 39 mit dem Gewichtsventil 38 zusammenwirken kann.

Solange das Gewichtsventil 38 aus dem Deckel 5 hervorsteht, kann das Zwischenelement 20 nicht zur Entriegelung des Deckels 5 bewegt werden. Erst wenn das Gewichtsventil 38 flächenbündig im Deckel 5 verschwindet, wenn der Druck im Zubereitungsraum 4 einen vorbestimmten Schwellenwert unterschreitet, kann die Erweiterung 39, insbesondere der klappbare Abschnitt 39a, über das Gewichtsventil 38 bewegt und damit auch das Zwischenelement 20 entgegen dem Uhrzeigersinn bewegt werden, um den Deckel 5 zu entriegeln.

Das Stellmittel 10 in Form der Stellwelle 10b ist gemäß den Ausführungsbeispielen der Fig. 5, Fig. 6 und Fig. 7 zur manuellen Betätigung durch einen Benutzer ausgebildet und eingerichtet, indem ein oberhalb des Zwischenelements 20 angeordneter Abschnitt der Stellwelle 10b von einem Benutzer manuell oder mit einem Werkzeug drehbar ist, um das Zwischenelement - in Abhängigkeit von der Drehrichtung - und damit den Deckel 5 zu ver- oder entriegeln und/oder das Ventil 13 zu betätigen. Auch das Ventilbetätigungsmittel 14 der Fig. 5, Fig. 6 und Fig. 7 ist zur manuellen Betätigung durch einen Benutzer ausgebildet und eingerichtet, indem ein Benutzer das Ventilbetätigungsmittel 14 beispielsweise an der Gegenkontaktschräge 24 anhebt, um dadurch das Ventil 13 zu betätigen und Druck aus dem Zubereitungsraum 4 entweichen zu lassen.

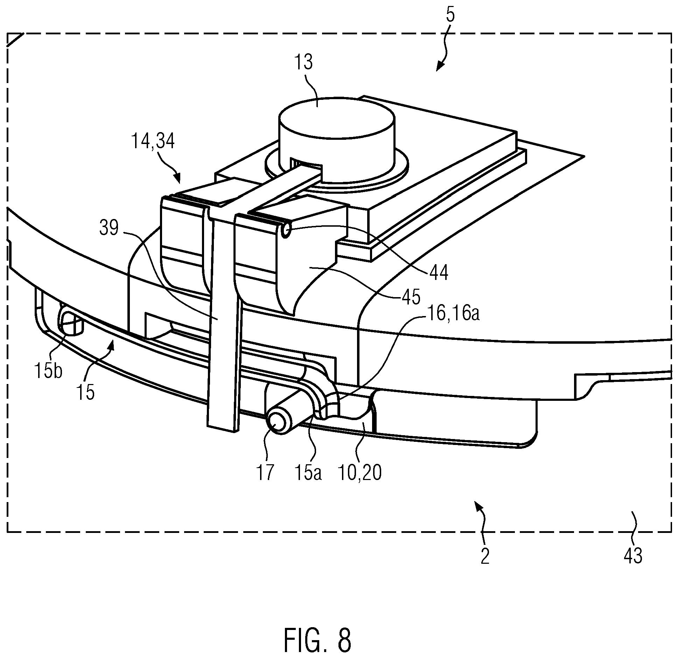

Fig. 8 zeigt ein Ausführungsbeispiel eines Zubereitungsgefäßes 2 mit Deckel 5 in einer vergrößerten Ansicht. Insbesondere um sicherzustellen, dass der Deckel 5 nur dann entriegelt werden kann, wenn der Druck innerhalb des Zubereitungsraums 4 unterhalb einer unkritischen Schwelle, beispielsweise von 4 kPa, liegt, ist bei dem Ausführungsbeispiel gemäß Fig. 8 eine Sicherheitseinrichtung 34 vorgesehen. Bei diesem Ausführungsbeispiel ist die Sicherheitseinrichtung 34 ein Teil des Ventilbetätigungsmechanismus 14.

Die Sicherheitseinrichtung 34 weist eine schwenkbare Erweiterung 39 auf. Die klappbare Erweiterung 39 ist um eine Achse 44 schwenkbar in einem Lagerbock 45 gehalten. Der Lagerbock 45 ist neben dem Ventil 13 angeordnet. Das Zwischenelement 20 oder mindestens ein Stellmittel 10 weist einen Vorsprung 17 auf, der mit dem Verriegelungsmittel 16, hier einem Verriegelungsring 16a, zusammenwirkend angeordnet ist. Der Vorsprung 17 ist - ähnlich wie für Fig. 4 beschrieben - in einer Führungsnut 15 zwischen einer ersten Anschlagkante 15a und einer zweiten Anschlagkante 15b bewegbar, so dass in Abhängigkeit von der Bewegungsrichtung des Vorsprungs 17 auch der Verriegelungsring 16a bewegt wird.

Bei einer Bewegung des Zwischenelements 20 bzw. des Stellmittels 10 zum Verriegeln des Deckels 5 ist die Erweiterung 39 beispielsweise so verschwenkt, dass sie nicht mit dem Vorsprung 17 interagiert. Eine Bewegung des Vorsprungs 17 in eine entgegengesetzte Richtung - zum Entriegeln - wird so lange von der Erweiterung 39 blockiert, bis der Druck im Zubereitungsraum 4 unter einen Schwellenwert gesunken ist, oder durch ein Verschwenken der Erweiterung 39 zum Passieren des Vorsprungs 17 wird stets das Ventil 13 betätigt, so dass ggf. vorhandener Druck entweichen kann.

Es ist auch vorgesehen, dass das Ventil 13 mit der Erweiterung 39 derart zusammenwirkt, dass solange der Druck innerhalb des Zubereitungsraums 4 oberhalb eines Schwellenwertes liegt, die Erweiterung 39 eine Bewegung des Vorsprungs 17 und damit ein Entriegeln des Deckels 5 blockiert. Es ist ferner vorgesehen, dass an dem Steuermittel 10 und/oder an dem Zwischenelement 20 mindestens eine - nicht dargestellte - Rampe angeordnet ist, die beispielsweise eine Ausweichbewegung der schwenkbaren Erweiterung beim Verriegeln bewirkt.

Das Ventilbetätigungsmittel 14 ist mittels der schwenkbaren Erweiterung 39 zur manuellen Betätigung durch einen Benutzer ausgebildet und eingerichtet. Um Druck aus dem Zubereitungsinnenraum 4 entweichen zu lassen, kann die Erweiterung 39 manuell von einem Benutzer verschwenkt werden, wodurch das Ventil 13 betätigt wird.

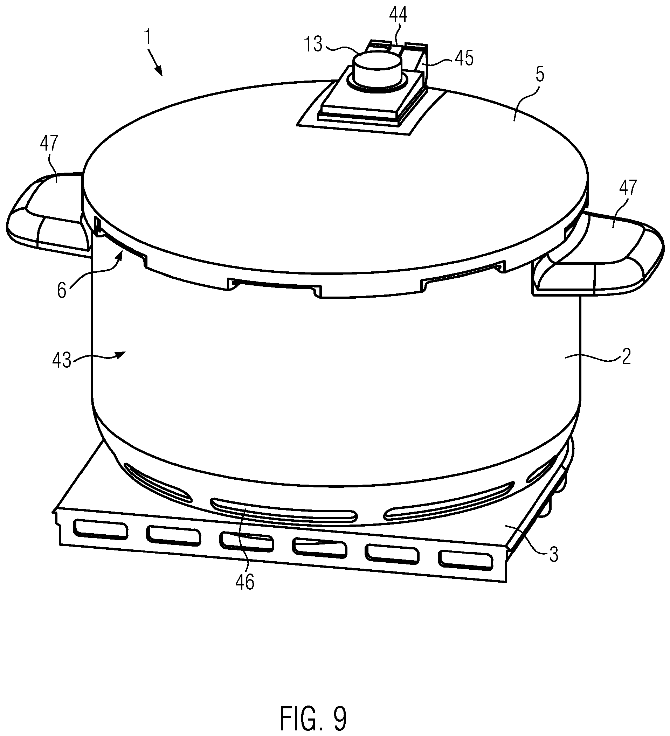

Fig. 9 zeigt ein Ausführungsbeispiel eines Zubereitungsgefäßes 2 mit einem Deckel 5, bei dem das Aktorelement 9, das Stellmittel 10 sowie weitere Komponenten, z. B. das Zwischenelement 20, hinter einer Verkleidung 43 angeordnet sind. Das Zubereitungsgefäß 2 ist hier beispielhaft auf einem Teil einer Küchengerätebasis 3 angeordnet. Bei diesem Ausführungsbeispiel ist die Verkleidung 43 vollumfänglich angeordnet und erstreckt sich vom oberen Rand 6 des Zubereitungsgefäßes 2 bis zum Fußbereich des Zubereitungsgefäßes 2. Die Verkleidung 43 bildet vorzugsweise eine doppelwandige Konstruktion und/oder ist isolierend ausgebildet. Im Fußbereich des Zubereitungsgefäßes 2 weist die Verkleidung 43 eine Mehrzahl an Öffnungen auf, die hier als längliche Schlitze ausgebildet sind. Das Zubereitungsgefäß 2 weist im Bereich des oberen Randes 6 zwei auf dem Umfang gegenüberliegend angeordnete Tragegriffe 47 auf.

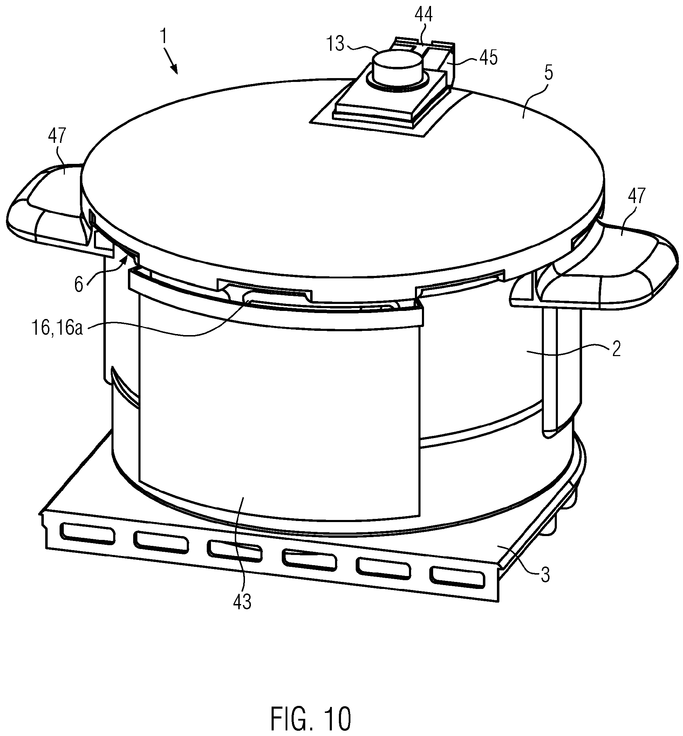

Fig. 10 zeigt ein Ausführungsbeispiel eines Zubereitungsgefäßes 2 mit einem Deckel 5. Das Zubereitungsgefäß 2 weist eine Verkleidung 43 auf, die sich über einen Teil der Oberfläche des Zubereitungsgefäßes 2 erstreckt. Das Stellmittel 10 und beispielsweise das Zwischenelement 20 sind hinter der Verkleidung 43 angeordnet. Bei diesem Ausführungsbeispiel ist die Verkleidung 43 teilumfänglich angeordnet und erstreckt sich lediglich über einen Teil der Höhe des Zubereitungsgefäßes 2. Die Verkleidung 43 bildet eine doppelwandige Konstruktion und/oder ist thermisch isolierend ausgebildet. Das Zubereitungsgefäß 2 weist im Bereich des oberen Randes 6 zwei auf dem Umfang gegenüberliegend angeordnete Tragegriffe 47 auf.

## Patentansprüche

1. Zubereitungsgefäß (2) zum Anordnen an einer Küchengerätebasis (3) eines Küchengeräts, aufweisend mindestens einen Zubereitungsraum (4), mindestens einen Deckel (5) zum Verschließen des Zubereitungsraums (4) und mindestens ein Aktorelement (9), wobei das Aktorelement (9) in einem Schnittstellenbereich (12) des Zubereitungsgefäßes (2) angeordnet ist, wobei das Aktorelement (9) rotierbar gehalten ist, wobei das Aktorelement (9) derart mit einem Stellmittel (10) in Wirkverbindung steht, dass das Stellmittel (10) von dem Aktorelement (9) betätigbar ist, und wobei der Schnittstellenbereich (12) zum Anordnen in einer Küchengerätebasis (3) ausgebildet ist,
**dadurch gekennzeichnet, dass**
mindestens ein Ventil (13) und mindestens ein Ventilbetätigungsmittel (14) vorhanden sind, dass das Ventilbetätigungsmittel (14) dem Öffnen und/oder Schließen des Ventils (13) dient, und dass das Stellmittel (10) derart ausgebildet und angeordnet ist, dass mit dem Stellmittel (10), mittelbar oder unmittelbar, zumindest zeitweise auch das Ventilbetätigungsmittel (14) betätigbar ist.

2. Zubereitungsgefäß (2) nach Anspruch 1,
**dadurch gekennzeichnet, dass**
das Stellmittel (10) zumindest teilweise mit dem Aktorelement (9) um eine gemeinsame, erste Drehachse (X1) drehbar gehalten ist, oder dass das Stellmittel (10) zumindest teilweise um eine zweite Drehachse (X2) drehbar gehalten ist.

3. Zubereitungsgefäß (2) nach Anspruch 1 oder 2,
**dadurch gekennzeichnet, dass**
ein Verriegelungsmittel (16) vorhanden ist, dass das Verriegelungsmittel (16) zur Verriegelung des Deckels (5) zumindest mittelbar von dem Stellmittel (10) bewegbar ist, und dass das Verriegelungsmittel (16) von dem Stellmittel (10) zumindest zwischen einer Freigabeposition und einer Verriegelungsposition bewegbar ist, insbesondere dass das Ventilbetätigungsmittel (14) mit dem Verriegelungsmittel (16) betätigbar ist.

4. Zubereitungsgefäß (2) nach einem der Ansprüche 1 bis 3,
**dadurch gekennzeichnet, dass**
ein verschiebbares Zwischenelement (20) vorhanden ist, dass das Zwischenelement (20) durch das Stellmittel (10) bewegbar ist, insbesondere dass mit dem Zwischenelement (20) ein Verriegelungsmittel (16) zumindest zwischen einer Freigabeposition und einer Verriegelungsposition bewegbar ist und/oder dass mit dem Zwischenelement (20) das Ventilbetätigungsmittel (14) betätigbar ist.

5. Zubereitungsgefäß (2) nach Anspruch 4,
**dadurch gekennzeichnet, dass**
das Zwischenelement (20) mindestens eine Kontaktschräge (23) aufweist, dass mit der Kontaktschräge (23) das Ventilbetätigungsmittel (14) betätigbar ist, und dass das Ventilbetätigungsmittel eine Gegenkontaktschräge aufweist, so dass, wenn das Zwischenelement auf das Ventilbetätigungsmittel zubewegt wird, die Gegenkontaktschräge an der Kontaktschräge abgleitet, insbesondere dass die Kontaktschräge (23) an einem Endbereich des Zwischenelements (20) angeordnet ist.

6. Zubereitungsgefäß (20) nach Anspruch 4 oder 5,
**dadurch gekennzeichnet, dass**
das Zwischenelement (20) in einer Führungskontur (25) bewegbar gehalten ist, und dass die Führungskontur (25) als Griffelement an der Außenseite des Zubereitungsgefäßes (2) ausgebildet ist und/oder dass das Zwischenelement (20) mindestens eine erste Zahnleiste (22) zum Zusammenwirken mit dem Stellmittel (10) aufweist.

7. Zubereitungsgefäß (2) nach einem der Ansprüche 1 bis 6,
**dadurch gekennzeichnet, dass**
das Stellmittel (10) mindestens einen ersten Zahnring (26) und mindestens einen zweiten Zahnring (27) aufweist, insbesondere dass der erste Zahnring (26) und der zweite Zahnring (27) unterschiedliche Verzahnungseigenschaften aufweisen, um eine Übersetzung zu realisieren.

8. Zubereitungsgefäß (2) nach einem der Ansprüche 1 bis 7,
**dadurch gekennzeichnet, dass**
das Aktorelement (9) zum Bewegen des Stellmittels (10) formschlüssig mit dem Stellmittel (10) zusammenwirkt, insbesondere dass das Aktorelement (9) mindestens eine Aktorzahnleiste (30) aufweist.

9. Zubereitungsgefäß (2) nach Anspruch 8,
**dadurch gekennzeichnet, dass**
die Aktorzahnleiste (30) mindestens einen ersten Zahnleistenabschnitt (30a) und mindestens einen zweiten Zahnleistenabschnitt (30b) aufweist, und dass der erste Zahnleistenabschnitt (30a) und der zweite Zahnleistenabschnitt (30b) durch mindestens einen Zwischenbereich (32) zueinander beabstandet sind, bevorzugt dass im Zwischenbereich (32) keine Kraftübertragung von dem Aktorelement (9) auf das Stellmittel (10) erfolgt, insbesondere um mittels des Zwischenbereichs (32) einen Leerhub zu realisieren.

10. Zubereitungsgefäß (2) nach Anspruch 9,
**dadurch gekennzeichnet, dass**
mit dem ersten Zahnleistenabschnitt (30a) über das Stellmittel (10) eine Verriegelung des Deckels (5) bewirkbar ist, und dass mit dem zweiten Zahnleistenabschnitt (30b) über das Stellmittel (10) eine Betätigung des Ventilbetätigungsmittels (14) bewirkbar ist.

11. Zubereitungsgefäß (2) nach einem der Ansprüche 1 bis 10,
**dadurch gekennzeichnet, dass**
das Aktorelement (9) mindestens eine Verriegelungskontur (29) aufweist, und dass die Verriegelungskontur (29) zum Zusammenwirken mit einer Verriegelungsgegenkontur (31) an der Küchengerätebasis (3) ausgebildet ist, insbesondere dass die Verriegelungskontur (29) und die Verriegelungsgegenkontur (31) zum formschlüssigen Verriegeln ausgebildet sind.

12. Zubereitungsgefäß (2) nach einem der Ansprüche 1 bis 11,
**dadurch gekennzeichnet, dass**
mindestens eine Sicherheitseinrichtung (34) vorgesehen ist, die dazu eingerichtet und ausgebildet ist, eine Entriegelung des Deckels (5) zu verhindern, solange ein Schwellenwert eines Drucks im Zubereitungsraum (4) überschritten wird.

13. Zubereitungsgefäß (2) nach einem der Ansprüche 1 bis 12,
**dadurch gekennzeichnet, dass**
das Ventilbetätigungsmittel (14) und/oder das Stellmittel (10) für eine manuelle Betätigung durch einen Benutzer eingerichtet und ausgebildet sind.

14. Küchengerät (1) mit mindestens einer Küchengerätebasis (3) und mindestens einem Zubereitungsgefäß (2) nach einem der Ansprüche 1 bis 13, wobei das Zubereitungsgefäß (2) in einem Aufnahmebereich (33) an der Küchengerätebasis (3) anordenbar ist,
**dadurch gekennzeichnet, dass**
die Küchengerätebasis (3) ein Antriebsmittel (35) zum Zusammenwirken mit dem Aktorelement (9) des Zubereitungsgefäßes (2) in dem im Aufnahmebereich (33) angeordneten Zustand des Zubereitungsgefäßes (2) aufweist.

15. Küchengerät (1) nach Anspruch 14,
**dadurch gekennzeichnet, dass**
das Antriebsmittel (35) der Küchengerätebasis (3) als Antriebsring mit zwei Vorsprüngen (36) ausgebildet ist und dass diese Vorsprünge (36) im aufgebrachten Zustand mit entsprechenden Ausnehmungen im Aktorelement (9) zusammenwirken, so dass eine Bewegung des Antriebsrings der Küchengerätebasis (3) eine gleiche Bewegung des Aktorelements (9), hier eine Rotation, bewirkt.

## Claims

1. A preparation vessel (2) for arranging on a kitchen appliance base (3) of a kitchen appliance, comprising at least one preparation chamber (4), at least one lid (5) for closing the preparation chamber (4), and at least one actuator element (9), wherein the actuator element (9) is arranged in an interface region (12) of the preparation vessel (2), wherein the actuator element (9) is held in a rotatable manner, wherein the actuator element (9) is in operative connection with an actuating means (10) such that the actuating means (10) is actuatable by the actuator element (9), and wherein the interface region (12) is configured for arranging in a kitchen appliance base (3),
**characterized in that**
at least one valve (13) and at least one valve actuation means (14) are provided, that the valve actuation means (14) serves for opening and/or closing the valve (13), and that the actuating means (10) is configured and arranged such that with the actuating means (10), directly or indirectly, at least temporarily also the valve actuation means (14) is actuatable.

2. The preparation vessel (2) according to claim 1,
**characterized in that**
the actuating means (10) is held at least partially rotatable with the actuator element (9) about a common first axis of rotation (X1), or that the actuating means (10) is held at least partially rotatable about a second axis of rotation (X2).

3. The preparation vessel (2) according to claim 1 or 2,
**characterized in that**
a locking means (16) is provided, that the locking means (16) for locking the lid (5) is movable at least indirectly by the actuating means (10), and that the locking means (16) is movable by the actuating means (10) at least between a release position and a locking position, in particular that the valve actuation means (14) is actuatable with the locking means (16).

4. The preparation vessel (2) according to any one of claims 1 to 3,
**characterized in that**
a displaceable intermediate element (20) is provided, that the intermediate element (20) is movable by the actuating means (10), in particular that with the intermediate element (20) a locking means (16) is movable at least between a release position and a locking position and/or that with the intermediate element (20) the valve actuation means (14) is actuatable.

5. The preparation vessel (2) according to claim 4,
**characterized in that**
the intermediate element (20) has at least one contact bevel (23), that with the contact bevel (23) the valve actuation means (14) is actuatable, and that the valve actuation means has a counter-contact bevel, so that when the intermediate element is moved toward the valve actuation means, the counter-contact bevel slides along the contact bevel, in particular that the contact bevel (23) is arranged at an end region of the intermediate element (20).

6. The preparation vessel (20) according to claim 4 or 5,
**characterized in that**
the intermediate element (20) is held movably in a guide contour (25), and that the guide contour (25) is configured as a grip element on the outside of the preparation vessel (2) and/or that the intermediate element (20) has at least one first toothed rack (22) for cooperating with the actuating means (10).

7. The preparation vessel (2) according to any one of claims 1 to 6,
**characterized in that**
the actuating means (10) has at least one first toothed ring (26) and at least one second toothed ring (27), in particular that the first toothed ring (26) and the second toothed ring (27) have different toothing properties in order to realize a gear ratio.

8. The preparation vessel (2) according to any one of claims 1 to 7,
**characterized in that**
the actuator element (9) cooperates in a form-fitting manner with the actuating means (10) for moving the actuating means (10), in particular that the actuator element (9) has at least one actuator toothed rack (30).

9. The preparation vessel (2) according to claim 8,
**characterized in that**
the actuator toothed rack (30) has at least one first toothed rack section (30a) and at least one second toothed rack section (30b), and that the first toothed rack section (30a) and the second toothed rack section (30b) are spaced apart from one another by at least one intermediate region (32), preferably that in the intermediate region (32) no force transmission from the actuator element (9) to the actuating means (10) takes place, in particular in order to realize an idle stroke by means of the intermediate region (32).

10. The preparation vessel (2) according to claim 9,
**characterized in that**
with the first toothed rack section (30a) a locking of the lid (5) is effectable via the actuating means (10), and that with the second toothed rack section (30b) an actuation of the valve actuation means (14) is effectable via the actuating means (10).

11. The preparation vessel (2) according to any one of claims 1 to 10,
**characterized in that**
the actuator element (9) has at least one locking contour (29), and that the locking contour (29) is configured for cooperating with a locking counter-contour (31) on the kitchen appliance base (3), in particular that the locking contour (29) and the locking counter-contour (31) are configured for form-fitting locking.

12. The preparation vessel (2) according to any one of claims 1 to 11,
**characterized in that**
at least one safety device (34) is provided which is set up and configured to prevent an unlocking of the lid (5) as long as a threshold value of a pressure in the preparation chamber (4) is exceeded.

13. The preparation vessel (2) according to any one of claims 1 to 12,
**characterized in that**
the valve actuation means (14) and/or the actuating means (10) are set up and configured for manual actuation by a user.

14. A kitchen appliance (1) having at least one kitchen appliance base (3) and at least one preparation vessel (2) according to any one of claims 1 to 13, wherein the preparation vessel (2) is arrangeable in a receiving region (33) on the kitchen appliance base (3),
**characterized in that**
the kitchen appliance base (3) has a drive means (35) for cooperating with the actuator element (9) of the preparation vessel (2) in the state of the preparation vessel (2) arranged in the receiving region (33).

15. The kitchen appliance (1) according to claim 14,
**characterized in that**
the drive means (35) of the kitchen appliance base (3) is configured as a drive ring with two projections (36), and that these projections (36) in the mounted state cooperate with corresponding recesses in the actuator element (9), so that a movement of the drive ring of the kitchen appliance base (3) effects an identical movement of the actuator element (9), here a rotation.

## Revendications

1. Récipient de préparation (2) destiné à être disposé sur une base d'appareil de cuisine (3) d'un appareil de cuisine, comprenant au moins un espace de préparation (4), au moins un couvercle (5) pour fermer l'espace de préparation (4) et au moins un élément actionneur (9), l'élément actionneur (9) étant disposé dans une zone d'interface (12) du récipient de préparation (2), l'élément actionneur (9) étant maintenu de manière rotative, l'élément actionneur (9) étant en liaison fonctionnelle avec un moyen d'actionnement (10) de telle sorte que le moyen d'actionnement (10) peut être actionné par l'élément actionneur (9), et la zone d'interface (12) étant conçue pour être disposée dans une base d'appareil de cuisine (3),
**caractérisé en ce qu'**
au moins une soupape (13) et au moins un moyen d'actionnement de soupape (14) sont présents, **en ce que** le moyen d'actionnement de soupape (14) sert à l'ouverture et/ou à la fermeture de la soupape (13), et **en ce que** le moyen d' actionnement (10) est conçu et disposé de telle sorte que le moyen d'actionnement de soupape (14) peut également être actionné, directement ou indirectement, au moins temporairement, par le moyen d'actionnement (10).

2. Récipient de préparation (2) selon la revendication 1,
**caractérisé en ce que**
le moyen d'actionnement (10) est maintenu de manière rotative au moins partiellement avec l'élément actionneur (9) autour d'un premier axe de rotation commun (X1), ou **en ce que** le moyen d'actionnement (10) est maintenu de manière rotative au moins partiellement autour d'un deuxième axe de rotation (X2).

3. Récipient de préparation (2) selon la revendication 1 ou 2,
**caractérisé en ce qu'**
un moyen de verrouillage (16) est présent, **en ce que** le moyen de verrouillage (16) peut être déplacé au moins indirectement par le moyen d'actionnement (10) pour le verrouillage du couvercle (5), et **en ce que** le moyen de verrouillage (16) peut être déplacé par le moyen d'actionnement (10) au moins entre une position de libération et une position de verrouillage, en particulier **en ce que** le moyen d'actionnement de soupape (14) peut être actionné par le moyen de verrouillage (16).

4. Récipient de préparation (2) selon l'une des revendications 1 à 3,
**caractérisé en ce qu'**
un élément intermédiaire coulissant (20) est présent, **en ce que** l'élément intermédiaire (20) peut être déplacé par le moyen d'actionnement (10), en particulier **en ce qu'**un moyen de verrouillage (16) peut être déplacé au moins entre une position de libération et une position de verrouillage par l'élément intermédiaire (20) et/ou **en ce que** le moyen d'actionnement de soupape (14) peut être actionné par l'élément intermédiaire (20).

5. Récipient de préparation (2) selon la revendication 4,
**caractérisé en ce que**
l'élément intermédiaire (20) présente au moins une rampe de contact (23), **en ce que** le moyen d'actionnement de soupape (14) peut être actionné par la rampe de contact (23), et **en ce que** le moyen d'actionnement de soupape présente une contre-rampe de contact, de sorte que, lorsque l'élément intermédiaire est déplacé vers le moyen d'actionnement de soupape, la contre-rampe de contact glisse sur la rampe de contact, en particulier **en ce que** la rampe de contact (23) est disposée à une zone d'extrémité de l'élément intermédiaire (20).

6. Récipient de préparation (20) selon la revendication 4 ou 5,
**caractérisé en ce que**
l'élément intermédiaire (20) est maintenu de manière mobile dans un contour de guidage (25), et **en ce que** le contour de guidage (25) est conçu comme élément de préhension sur la face extérieure du récipient de préparation (2) et/ou **en ce que** l'élément intermédiaire (20) présente au moins une première crémaillère (22) pour coopérer avec le moyen d'actionnement (10).

7. Récipient de préparation (2) selon l'une des revendications 1 à 6,
**caractérisé en ce que**
le moyen d'actionnement (10) présente au moins une première couronne dentée (26) et au moins une deuxième couronne dentée (27), en particulier **en ce que** la première couronne dentée (26) et la deuxième couronne dentée (27) présentent des propriétés de denture différentes pour réaliser une démultiplication.

8. Récipient de préparation (2) selon l'une des revendications 1 à 7,
**caractérisé en ce que**
l'élément actionneur (9) coopère par complémentarité de forme avec le moyen d 'actionnement (10) pour déplacer le moyen d'actionnement (10), en particulier en ce que l'élément actionneur (9) présente au moins une crémaillère d'actionneur (30).

9. Récipient de préparation (2) selon la revendication 8,
**caractérisé en ce que**
la crémaillère d'actionneur (30) présente au moins une première section de crémaillère (30a) et au moins une deuxième section de crémaillère (30b), et **en ce que** la première section de crémaillère (30a) et la deuxième section de crémaillère (30b) sont espacées l'une de l'autre par au moins une zone intermédiaire (32), de préférence **en ce qu'**aucune transmission de force de l'élément actionneur (9) au moyen d'actionnement (10) n'a lieu dans la zone intermédiaire (32), en particulier pour réaliser une course à vide au moyen de la zone intermédiaire (32).

10. Récipient de préparation (2) selon la revendication 9,
**caractérisé en ce qu'**
un verrouillage du couvercle (5) peut être effectué par la première section de crémaillère (30a) par l'intermédiaire du moyen d'actionnement (10), et **en ce qu'**un actionnement du moyen d'actionnement de soupape (14) peut être effectué par la deuxième section de crémaillère (30b) par l'intermédiaire du moyen d'actionnement (10).

11. Récipient de préparation (2) selon l'une des revendications 1 à 10,
**caractérisé en ce que**
l'élément actionneur (9) présente au moins un contour de verrouillage (29), et **en ce que** le contour de verrouillage (29) est conçu pour coopérer avec un contre-contour de verrouillage (31) sur la base d'appareil de cuisine (3), en particulier en ce que le contour de verrouillage (29) et le contre-contour de verrouillage (31) sont conçus pour un verrouillage par complémentarité de forme.

12. Récipient de préparation (2) selon l'une des revendications 1 à 11,
**caractérisé en ce qu'**
au moins un dispositif de sécurité (34) est prévu, qui est configuré et conçu pour empêcher un déverrouillage du couvercle (5) tant qu'une valeur seuil d'une pression dans l'espace de préparation (4) est dépassée.

13. Récipient de préparation (2) selon l'une des revendications 1 à 12,
**caractérisé en ce que**
le moyen d'actionnement de soupape (14) et/ou le moyen d'actionnement (10) sont configurés et conçus pour un actionnement manuel par un utilisateur.

14. Appareil de cuisine (1) comprenant au moins une base d'appareil de cuisine (3) et au moins un récipient de préparation (2) selon l'une des revendications 1 à 13, le récipient de préparation (2) pouvant être disposé dans une zone de réception (33) sur la base d'appareil de cuisine (3),
**caractérisé en ce que**
la base d'appareil de cuisine (3) présente un moyen d'entraînement (35) pour coopérer avec l'élément actionneur (9) du récipient de préparation (2) dans l'état disposé du récipient de préparation (2) dans la zone de réception (33).

15. Appareil de cuisine (1) selon la revendication 14,
**caractérisé en ce que**
le moyen d'entraînement (35) de la base d'appareil de cuisine (3) est conçu comme anneau d'entraînement avec deux saillies (36) et **en ce que** ces saillies (36) coopèrent à l'état monté avec des évidements correspondants dans l'élément actionneur (9), de sorte qu'un mouvement de l'anneau d'entraînement de la base d'appareil de cuisine (3) provoque un même mouvement de l'élément actionneur (9), ici une rotation.
